**Europäisches Patentamt**

**European Patent Office**

**Office européen des brevets**

(19)

(11) Veröffentlichungsnummer: **0 082 243**

**B1**

(12) # EUROPÄISCHE PATENTSCHRIFT

(45) Veröffentlichungstag der Patentschrift:
18.03.87

(51) Int. Cl.⁴: **G 01 S 17/50**, G 01 S 17/42

(21) Anmeldenummer: **82104827.9**

(22) Anmeldetag: **02.06.82**

(54) **Verfahren und Vorrichtung zur Messung der Geschwindigkeit bewegter Objekte.**

(30) Priorität: **17.12.81 CH 8062/81**

(43) Veröffentlichungstag der Anmeldung:
**29.06.83 Patentblatt 83/26**

(45) Bekanntmachung des Hinweises auf die Patenterteilung:
**18.03.87 Patentblatt 87/12**

(84) Benannte Vertragsstaaten:
**AT BE DE FR GB IT LU NL SE**

(56) Entgegenhaltungen:
**WO-A-80/02764
DE-A-2 723 584
DE-B-2 504 168
US-A-3 690 767
US-A-3 827 787**

(73) Patentinhaber: **ZELLWEGER USTER AG, Wilstrasse 11, CH- 8610 Uster (CH)**

(72) Erfinder: **Goede, Simon, Höhenstrasse 27, CH- 8620 Wetzikon (CH)**
Erfinder: **Hauser, Peter, Sonnenbergstrasse 67, CH- 8610 Uster (CH)**
Erfinder: **Mira, Silvio, Rehbühlstrasse 27, CH- 8610 Uster (CH)**

(74) Vertreter: **Dipl.- Phys.Dr. Manitz Dipl.- Ing. Finsterwald Dipl.- Ing. Grämkow Dipl.- Chem.Dr. Heyn Dipl.- Phys.Rotermund,, B.Sc. Morgan Robert- Koch- Strasse 1, D-8000 München 22 (DE)**

EP 0 082 243 B1

**0 082 243**

**Beschreibung**

Aus dem Stande der Technik ist sowohl ein Verfahren zur Raumüberwachung mittels gepulster Richtstrahlung als auch eine Vorrichtung zur Ausführung des Verfahrens bekannt, siehe Internationale Veröffentlichung Nr. WO 80/02764 vom 11.12.1980. In dieser Offenlegungsschrift wird unter anderem ein Verfahren beansprucht, siehe dort Anspruch 32, welches dadurch gekennzeichnet ist, dass wenigstens eine virtuelle Linie oder virtuelle Fläche einer Fahrbahn zugeordnet ist und die Überquerung einer virtuellen Linie oder die Durchdringung einer virtuellen Fläche durch mindestens ein Fahrzeug erfasst und ausgewertet und/oder registriert wird.

Es wird weiter gezeigt, wie mit Hilfe von Meßstrahlen ein sich bewegendes Objekt bezüglich Bewegung, Bahnkurve und/oder Geschwindigkeit und/oder Beschleunigung vermessen werden kann. Weiter wird in der erwähnten Schrift ein Strahlaufteilungssystem zur flächenmässigen oder raummässigen Strahlaufteilung oder Strahlauffächerung beschrieben und beansprucht.

Mit Hilfe dieser verfahrensmässigen und vorrichtungsmässigen Angaben ist es nahegelegt, zur Geschwindigkeitsmessung bewegter Objekte gepulste optische Meßstrahlen aus seitlicher Lage gegen die Bahn dieser Objekte zu richten, wobei diese Messstrahlen, ausgehend von mindestens einem Punkt, in mindestens eine Richtung gegen diese Bahn gerichtet sind.

Durch Messung und Auswertung von Laufzeiten von an den bewegten Objekten reflektierten optischen Impulsen können Koordinaten dieser Objekte zu verschiedenen, bekannten Zeitpunkten vermessen werden. Aus diesen Koordinaten oder den Entfernungsvektoren zu den Reflexionsstellen einerseits und dem zeitlichen Ablauf der Vermessungen andererseits, können Geschwindigkeitswerte errechnet und diese bestimmten Objekten zugeordnet werden.

Die gegen die Bahn der zu erfassenden Objekte zu richtenden Meßstrahlen können hierbei von einem Punkte ausgehen und unter einem bestimmten Winkel φ zueinander verlaufend gewählt werden. Auch können die Meßstrahlen von mehreren Punkten ausgehend parallel in definierten Abständen voneinander verlaufend gewählt werden. Vorzugsweise wählt man die Richtungen der Meßstrahlen so, dass sie in einer Ebene verlaufen, welche wenigstens annähernd parallel zur Bahn der zu erfassenden Objekte liegt.

Nachteilig bei einem Verfahren bzw. bei einer Vorrichtung der vorstehend beschriebenen Art ist, dass die im Raume stationären Meßstrahlen während der Messung durch die sich bewegenden Objekte angeschnitten werden, wodurch die zu vermessenden Objekte erfasst werden. Zur zeitlich genauen Erfassung des Eintritts eines verhältnismässig schnellen Objektes in einen Meßstrahl muss die Pulsfrequenz eines solchen Meßstrahls einen genügend hohen Wert haben, damit der sich ergebende Quantisierungsfehler in der Bestimmung des Eintrittzeitpunktes mindestens eine Grössenordnung kleiner ist, als die Zeitdauer, welche benötigt wird für das Zurücklegen der Strecke zwischen zwei aufeinanderfolgenden Meßstrahlen.

Für den praktischen Einsatz solcher Einrichtungen im öffentlichen Verkehr, zum Beispiel zur Überwachung des Motorfahrzeugverkehrs, ist der zulässigen Pulsfrequenz der einzusetzenden Meßstrahlen bei bestimmter Impulsleistung durch die sogenannten Augensicherheitsvorschriften ein bestimmter oberer Grenzwert gesetzt. Es zeigt sich nun, dass der Geschwindigkeitsmessbereich praktischer Vorrichtungen zur Geschwindigkeitsmessung nach den erwähnten Verfahren, einerseits wegen der zu beachtenden Quantisierungsfehler und andererseits wegen der zu berücksichtigenden Augensicherheitsvorschriften, zufolge der dafür erforderlichen Pulsfrequenz praktisch zu stark begrenzt ist. Deshalb sind Geschwindigkeitsmessverfahren und ihre Vorrichtungen nach dem beschriebenen Prinzip für bestimmte Anwendungen stark eingeschränkt oder gar untauglich.

Weiterhin ist aus dem Stand der Technik ein Geschwindigkeitsmessgerät nach der Deutschen Offenlegungsschrift 2 723 584 bekannt. Der im Zusammenhang mit der ersten zitierten Publikation erwähnte Nachteil wird nach dieser Publikation dadurch vermieden, dass das zu vermessende Objekt mit einem Meßstrahl dauernd verfolgt und mittels dieses Meßstrahls gleichzeitig vermessen wird. Solange hierbei der Winkel zwischen der Bewegungsrichtung eines zu erfassenden Objektes und des nach ihm ausgesandten Meßstrahls genügend klein, d.h. etwa unter 10° ist, und, wenn die Genauigkeitsanforderung für die Geschwindigkeitsmessung nicht extrem hoch ist, diese beispielsweise nur etwa auf 1,5 % genau sein muss, braucht der genannte Winkel nicht berücksichtigt zu werden. Die Geschwindigkeit des Objektes kann dann direkt aus der, während der optischen Verfolgung des Objektes sich ergebenden Veränderung der mit jedem Impuls gemessenen Distanz zum Objekt bestimmt werden. Der Eintrittszeitpunkt des Objektes in den Meßstrahl ist nach dieser Methode für die Messgenauigkeit belanglos und für die Pulsfrequenz kann ein für die Augensicherheit unbedenklicher Wert gewählt werden.

Aber auch diese zuletzt erwähnte Vorrichtung arbeitet nicht unter allen praktischen Bedingungen einwandfrei. Folgende Nachteile sind zu beachten:

1. Es wird bei dieser Geschwindigkeitsmessvorrichtung vorausgesetzt, dass der Meßstrahl das zu vermessende Objekt während der ganzen Messung stets am gleichen Ort auf dem zu vermessenden Objekt auftrifft. Da die Geschwindigkeitsmessvorrichtung dieser Art in einer bevorzugten Ausfürung als von Hand gehaltenes Gerät etwa ähnlich gestaltet ist wie eine Filmkamera, lasst es sich nicht vermeiden, dass sich der Auftreffpunkt des Meßstrahls auf dem zu vermessenden Objekt während des Messvorgangs verlagert. Vor allem bei unregelmässig geformten Objekten, wie Fahrzeugen, hat dies die Wirkung, dass eine Folge von Entfernungswerten zu unterschiedlichen Auftreffpunkten auf einem zu vermessenden Objekt als Basis der Geschwindigkeitsbestimmung dient. Das bringt natürlich eine grosse Unsicherheit in der Zuverlässigkeit der

2

Messung mit sich. In der zitierten Publikation ist zwar die bekannte Gauss'sche Fehlerquadratmethode als Möglichkeit erwähnt, aus einer Vielzahl unzuverlässiger Messergebnisse ein zuverlässigeres Endmessergebnis zu erarbeiten. Eine genauere Methode zur Untersuchung der Zuverlässigkeit einzelner Messresultate und ein Weg zur Ausscheidung von Messwerten, welche bei der Verlagerung des Auftreffpunktes des Meßstrahls zustande kommen, wird aber in der erwähnten Publikation nicht angegeben.

2. Besonders, wenn Geschwindigkeitsmessungen bei hoher Verkehrsdichte durchgeführt werden müssen, wenn sich vom Standpunkt der Messeinrichtung aus gesehen, mehrere Objekte, also Fahrzeuge, in einem relativ engen Winkelbereich bewegen, ist es nicht ausgeschlossen, dass der Meßstrahl während einer Messung, mindestens zeitweise, mehrere Objekte mit unterschiedlichen Geschwindigkeiten trifft. Da in einem solchen Falle die gebildeten Entfernungswerte zu den Objekten als Mischwerte aufzufassen sind, müssen die daraus ermittelten Geschwindigkeitswerte ebenfalls als Mischwerte der Geschwindigkeiten der einzelnen Fahrzeuge bewertet werden. Eine Geschwindigkeitsmesseinrichtung, bei welcher solche Mischwertbildung, basierend auf Messungen zu verschiedenen Objekten, d.h. Fahrzeugen, unkontrolliert vorkommen kann, ist jedoch wegen der rechtlichen Anfechtbarkeit ihrer Messresultate praktisch unbrauchbar. In der zitierten Publikation ist in keiner Weise angegeben, wie solche Mischwertbildungen erkannt und gegebenenfalls unterdrückt oder ausgeschieden werden könnten.

Der vorliegenden Erfindung liegt daher die Aufgabe zugrunde, ein Verfahren und eine Vorrichtung zur zuverlässigen Geschwindigkeitsmessung bewegter Objekte zu schaffen, welche nach dem Prinzip gepulster Richtstrahlung arbeiten, bei welchen die bekannten Augensicherheitsvorschriften einhaltbar sind, bei welcher ohne unzulässige Einschränkung des Geschwindigkeitsmessbereiches die praktisch erforderliche Messgenauigkeit gewährleistet ist, wobei insbesondere einerseits Messfehler, verursacht durch Verlagerung des Auftreffpunktes des Messstrahls auf einem zu vermessenden Objekt während der Messdauer erkennbar und darauf beruhende Messwerte ausgeschieden werden und andererseits mehrdeutige Messungen, verursacht durch das wahrend der Messdauer mindestens zeitweise erfolgende Vermessen mehrerer Objekte bzw. Fahrzeuge erkannt und darauf beruhende Messwerte unterdrückt werden.

Gelöst wird diese Aufgabe durch das in Anspruch 1 definierte Verfahren und die in,
Anspruch 6 definierte Vorrichtung.

Im Folgenden wird die Erfindung anhand der beiliegenden Zeichnung beispielsweise erläutert. Dabei zeigt:

Fig. 1 drei Beispiele für die Anordnung von Strahlungsquerschnitten, wobei
Fig. 1a vier sich nicht überlappende Raumwinkelsektoren,
Fig. 1b sechs sich berührende Raumwinkelsektoren und
Fig. 1c sechs sich teilweise überlappende Raumwinkelsektoren zeigt;
Fig. 2 den Strahlversatz bei eine geneigte Glasplatte einfallenden Lichtstrahl;
Fig. 3 geometrische Zusammenhänge zur Berechnung des Strahlversatzes;
Fig. 4 eine schematische Darstellung einer Vorrichtung zur Bildung von versetzten Strahlenbündeln;
Fig. 5 eine schematische Darstellung einer Strahlablenkeinheit;
Fig. 6 eine spezielle Anordnung von Meßstrahlen;
Fig. 7 ein maßstäbliches Bild virtueller Abbildungen;
Fig. 8 Lichtflecke auf dem zu vermessenden Objekt;
Fig. 9 eine vorteilhafte Anordnung von Sende- und Empfangsoptik;
Fig. 10 schematisch den Aufbau einer Vorrichtung gemäss den Ansprüchen;
Fig. 11a und 11b ein Block- und Funktionsschema einer Geschwindigkeitsmesseinrichtung gemäss Beschreibung;
Fig. 12 ein Blockschaltbild einer Senderauslöse- und Antriebsregelschaltung;
Fig. 13 Impulsdiagramme für vier Zeitabschnitte;
Fig. 14-1/14-2 ein Flussdiagramm des Hauptprogramms für sechskanalige Messung;
Fig. 14A-1/14A-2 ein Flussdiagramm des Hauptprogramms für einkanalige Messung;

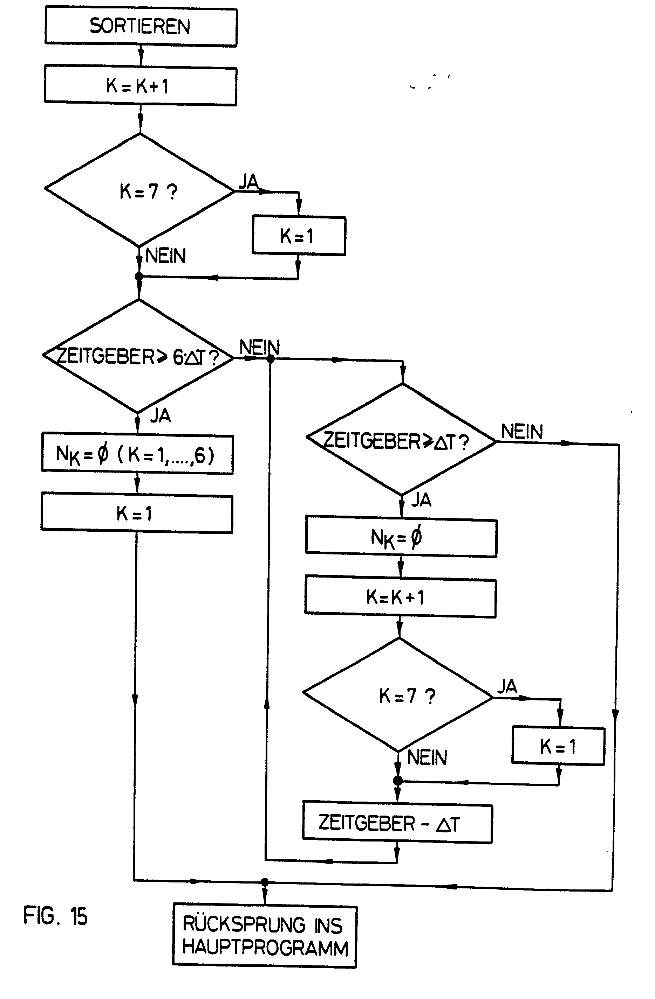

Fig. 15 ein Flussdiagramm für das Sortierprogramm;

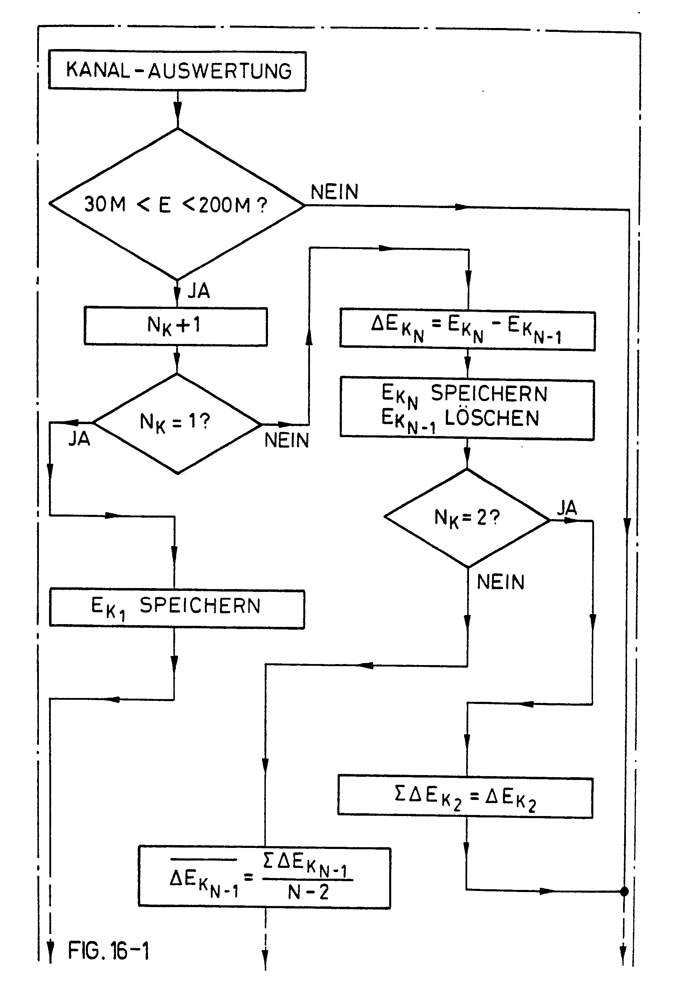

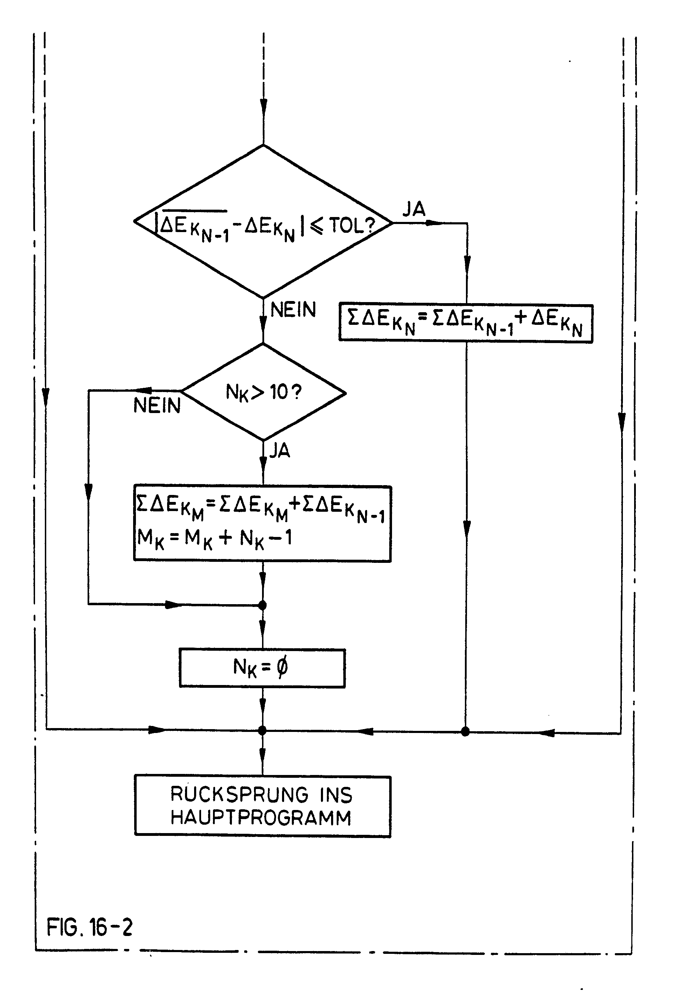

Fig. 16-1/16-2 ein Flussdiagramm für die Kanalauswertung;

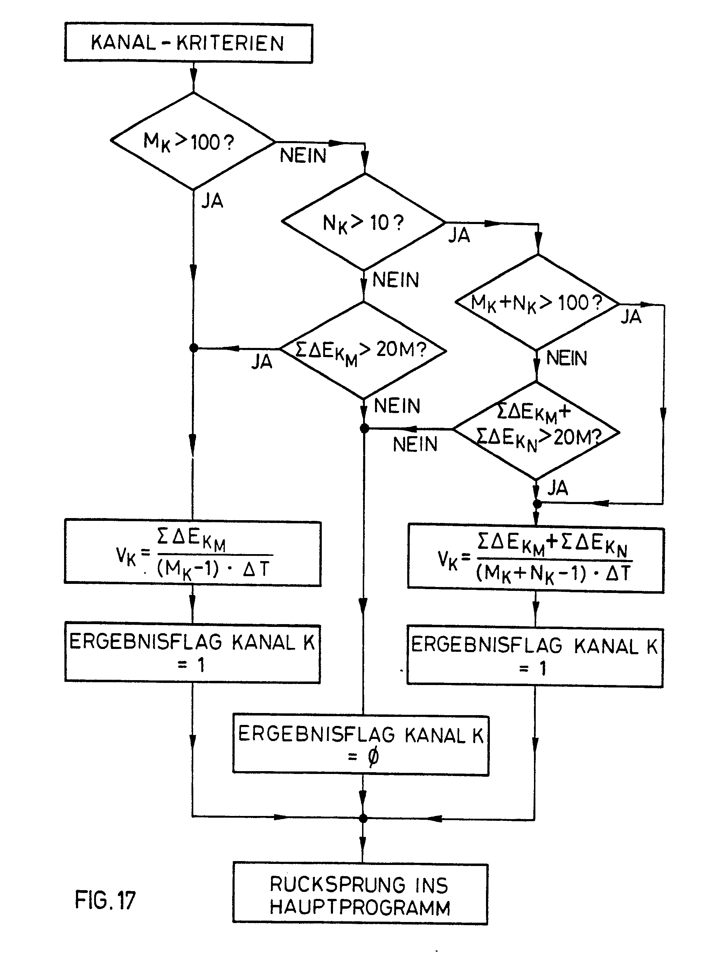

Fig. 17 ein Flussdiagramm für die Erfassung der Kanalkriterien;

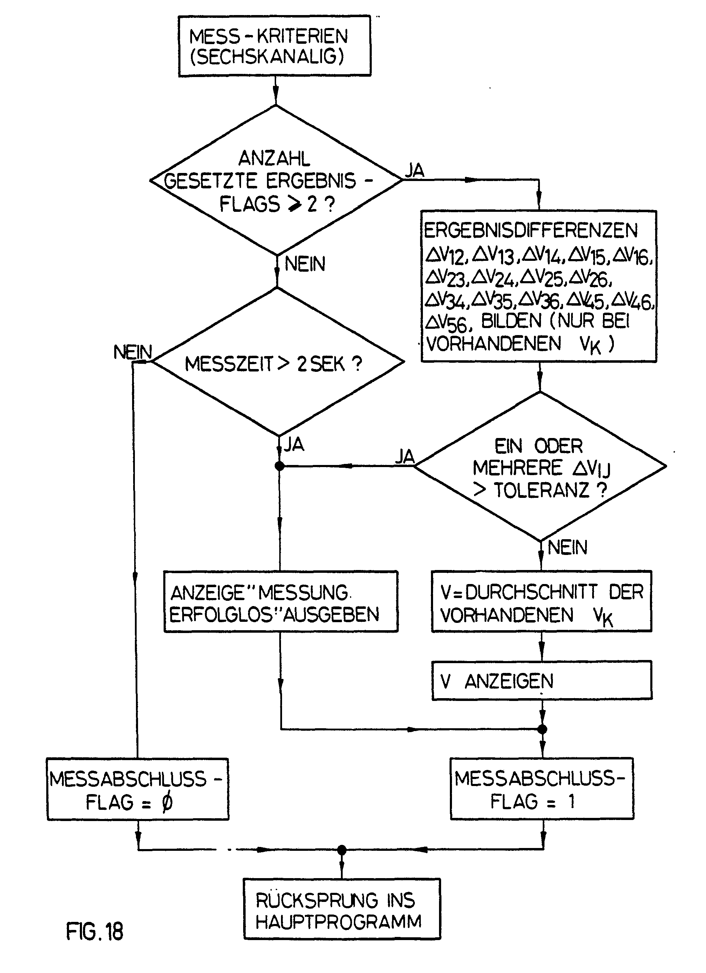

Fig. 18 ein Flussdiagramm für die Messkriterien bei sechskanaliger Messung;

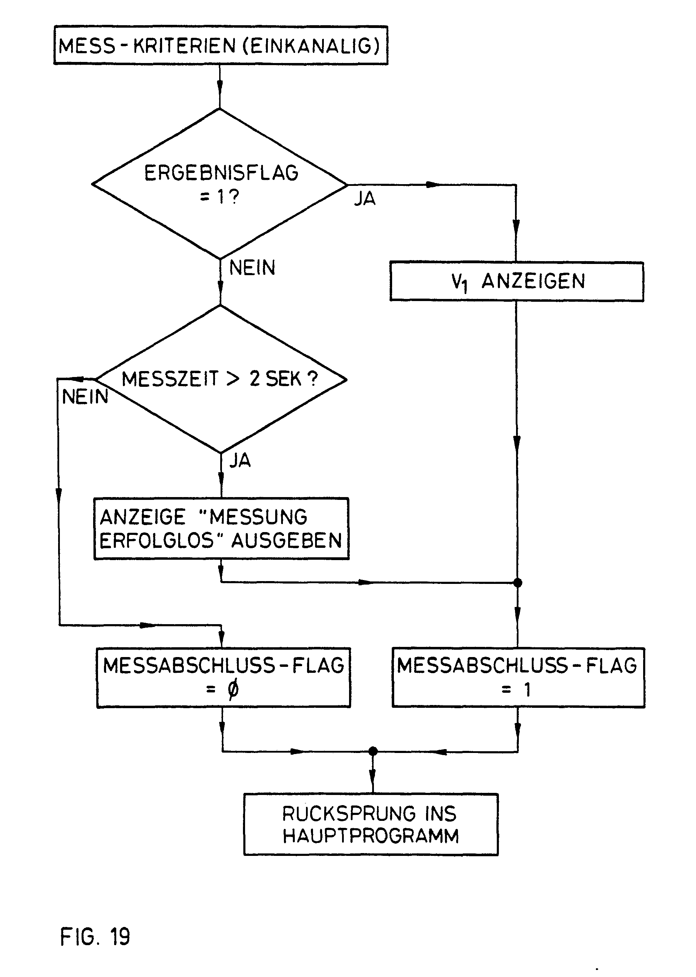

Fig. 19 ein Flussdiagramm für die Messkriterien bei einkanaliger Messung.

Als ein Anwendungsbeispiel der Erfindung sei angenommen, die Geschwindigkeit eines Fahrzeuges, beispielsweise eines Autos, solle mittels einer Folge optischer Impulse gemessen werden. Dabei kann sichtbare oder unsichtbare, beispielsweise infrarote, Strahlung benützt werden. Aus dem Stande der Technik ist eine Vorrichtung bekannt, mittels welcher solche Impulse beispielsweise von einer Laser-Diode erzeugt und mittels einer optischen Anordnung gegen ein bewegtes Objekt, beispielsweise ein entgegenkommendes oder sich entfernedes Auto, gerichtet werden können. An Auftreffstellen des aus einer Folge von optischen Impulsen bestehenden Meßstrahls werden die Impulse reflektiert, und ein Teil der Sendeenergie der Impulse gelangt zurück zum Standort der Messvorrichtung. Dieser ist auch ein, aus dem Stande der Technik bekannter, optischer Impulsempfänger zugeordnet, mittels welchem es gelingt, die Laufzeit der Impulse vom Sender zum vermessenen Objekt und zurück zum Empfänger zu messen.

Unter Berücksichtigung der Ausbreitungsgeschwindigkeit und der gemessenen Laufzeit lässt sich für jeden empfangenen, reflektierten Impuls ein Entfernungswert errechnen. Bewegt sich das vermessene Objekt mit gleichförmiger Geschwindigkeit und folgen sich die Sendeimpulse in gleichen Zeitintervallen aufeinander, so kann offensichtlich aus der Veränderung der zu verschiedenen, aber bekannten Zeiten gemessenen Entfernungen die relative Geschwindigkeit des vermessenen Objektes zum Messstandort ermittelt werden.

Ergibt beispielsweise der n. Impuls einen Entfernungswert $E_n$ und der n + 1. Impuls einen Entfernungswert $E_{n+1}$ und ist das Zeitintervall zwischen dem n. und dem n + 1. Impuls = $\Delta t$, so ergibt sich für die Zeitspanne zwischen dem n. und dem n + 1. Impuls ein Geschwindigkeitsmesswert nach der Formel

$$V = \frac{E_{n+1} - E_n}{\Delta t}$$

Eine Folge streng periodischer Impulse sollte daher bei einem sich mit gleichförmiger Geschwindigkeit bewegenden Objkt eine Folge gleicher Geschwindigkeitsmesswerte aufgrund der je nach Bewegungsrichtung linear steigenden beziehungsweise fallenden Entfernungswerte ergeben.

Zufolge der praktisch unvermeidlichen Schwankungen der Auftreffstellen des Meßstrahls auf dem zu vermessenden Objekt ergeben sich trotz gleichförmiger Geschwindigkeit des Objektes jedoch Abweichungen bei den Entfernungswerten. Diese Erscheinung ist besonders ausgeprägt, wenn die Auftreffstellen des Meßstrahls auf gekrümmten oder geneigten Flächen des zu vermessenden Objektes liegen. Hierdurch können so grosse Abweichungen der gemessenen Geschwindigkeitswerte von der wahren Geschwindigkeit auftreten, dass die entsprechenden Geschwindigkeitsmesswerte mit praktisch untragbaren Fehlern behaftet wären.

Die Erfahrung zeigt nun aber, dass bei ausreichend hoher Pulsfrequenz und bei zumutbarer Sorgfalt in der Handhabung der Messvorrichtung während der Messdauer zwischenhinein immer Zeitspannen mit Folgen von relativ konstanten und daher zuverlässigen Geschwindigkeitsmesswerten auftreten. Das Problem besteht nun aber darin, herauszufinden, wann diese Zeitspannen zuverlässiger Messwerte tatsächlich auftreten und wann nicht, so dass gegebenenfalls ungenaue Geschwindigkeitsmesswerte automatisch unterdrückt bzw. ausgeschieden werden können.

Ein erster Aspekt der Erfindung besteht nun darin, dass die sich laufend ergebenden Geschwindigkeitsmesswerte vor ihrer Auswertung und/oder Anzeige temporär gespeichert und daraufhin überprüft werden, ob darin eine Folge von mindestens einer bestimmten Anzahl N von Geschwindigkeitsmesswerten innerhalb eines festgelegten Toleranzbereiches, unmittelbar aufeinanderfolgend, aufgetreten ist; mit anderen Worten, ob während der betreffenden Messdauer mindestens eine Zeitspanne T mit relativ konstanten, das heisst homogenen und daher als zuverlässig zu betrachtenden Geschwindigkeitsmesswerten aufgetreten ist. Ein aus mindestens einer Zeitspanne T mit zuverlässigen Messungen stammender Messwert oder ein Mittelwert aus den innerhalb dieser Zeitspanne errechneten, beziehungsweise gespeicherten Geschwindigkeitsmesswerten wird dann als zuverlässiger Geschwindigkeitsmesswert des vermessenen Objektes ausgewertet und/oder angezeigt, während die übrigen Messwerte unterdrückt beziehungsweise gelöscht werden.

Ein Meßstrahl der bisher beschriebenen Anordnung besteht aus einer Folge optischer Impulse, welche in eine bestimmte Richtung ausgesandt werden. Während jedes solchen Impulses breitet sich von der Lichtquelle, vorzugsweise einer Laser-Diode, kommend, ein eng gebündelter Lichtstrahl in einen bestimmten Raumwinkelsektor gegen das zu vermessende Objekt aus.

Nach einem weiteren Aspekt der Erfindung werden Meßstrahlen nicht nur in einen einzigen Raumwinkelsektor ausgestrahlt, sondern in ein Bündel von Raumwinkelsektoren, welche vorteilhafterweise eng beieinanderliegen, oder sich sogar teilweise überlappen können.

Innerhalb eines jeden solchen Raumwinkelsektors wird nun, wieder nach dem zuerst genannten Aspekt, ein Geschwindigkeitsmesswert gebildet, welcher aus einer Zeitspanne T zuverlässiger Messwerte aus diesem Raumwinkelsektor stammt. Ein solcher Messwert wird im weiteren als zuverlässiger Sektormesswert bezeichnet.

Nach dem zweiten Aspekt werden nun aber auch die so erhaltenen, zuverlässigen Sektormesswerte aus den einzelnen Raumwinkelsektoren temporär gespeichert und miteinander in Beziehung gebracht. Aus den für sich zuverlässigen Sektormesswerten wird nach diesem zweiten Aspekt nur dann ein verbindlicher Geschwindigkeitsmesswert des vermessenen Objektes abgeleitet und zur Auswertung und/oder Anzeige gebracht, wenn eine bestimmte Mindestanzahl dieser zuverlässigen Sektormesswerte vorliegen und deren Abweichungen untereinander innerhalb eines festgelegten Toleranzbereiches liegen. Nur ausnahmsweise werden innerhalb einer bestimmten Messzeit über alle Messkanäle zuverlässige Sektormesswerte erhalten. Deshalb wird zur Bestimmung eines verbindlichen Messwertes nur eine bestimmte Mindestzahl (welche in den meisten Anwendungsfällen kleiner ist als die volle Anzahl Messkanäle) von zuverlässigen Sektormesswerten gefordert.

Auf diese Weise wird eine hohe Verbindlichkeit des schliesslich gewonnenen Geschwindigkeitsmesswertes erreicht. Es wäre nämlich, namentlich bei dichtem Verkehr und relativ grosser Messdistanz durchaus denkbar dass verschiedene Meßstrahlen unterschiedliche Fahrzeuge erfassen. Dabei würden unterschiedliche Sektormesswerte entstehen. Solche unterschiedlichen Sektormesswerte können nie zu einem verbindlichen Geschwindigkeitsmesswert führen, da sie ja nicht einem einzigen bestimmten zu vermessenden Objekt in sicherer Weise zugeordnet werden können. Im Hinblick auf die geforderte rechtliche Unanfechtbarkeit der Messresultate müssen solche Fälle unbedingt ausgeschieden werden.

Schon die Massnahme nach dem ersten Aspekt ergibt zwar eine erhöhte Zuverlässigkeit des schliesslich gewonnenen Geschwindigkeitsmesswertes im Vergleich zum Stande der Technik. Aber erst eine Kombination des ersten erfinderischen Merkmals mit dem zweiten Aspekt ergibt auch eine für praktische Anforderungen hinreichende rechtliche Verbindlichkeit, beziehungsweise Unanfechtbarkeit, des schliesslich angezeigten Geschwindigkeitsmesswertes.

In aus der Technik von Dopplerradar-Geschwinigkeitsmessverfahren und Messvorrichtungen bekannter Weise lässt sich das Auftreten beziehungsweise Vorliegen eines zuverlässigen Geschwindigkeitsmesswertes eines vermessenen Objektes auch zur direkten oder zeitlich verzögerten Auslösung einer Registriervorrichtung verwenden, mit deren Hilfe ein vermessenes Objekt bildlich erfasst werden kann. Als Registrier- oder Aufnahmeeinrichtung kann beispielsweise eine elektrisch auslösbare Kamera oder eine entsprechende elektronische Videokamera vorgesehen sein.

Als Ausführungsbeispiel einer Geschwindigkeitsmesseinrichtung, welche mit gepulster Strahlung in nur einem Raumwinkelsektor arbeitet und daher nur einen Messkanal aufweist, sei auf die deutsche Offenlegungsschrift DE-A-2 723 584 verwiesen. Bei einer soichen einkanaligen Vorrichrung kann die Zuverlässigkeit des gemessenen Geschwindigkeitswertes durch die früher erwähnte Prüfung der Geschwindigkeitsmesswerte auf Gleichmässigkeit bzw. Homogenität ganz erheblich verbessert werden.

Im folgenden wird nun ein Ausführungsbeispiel einer Vorrichtung beschrieben, welche mit mehr als einem Raumwinkelsektor arbeitet.

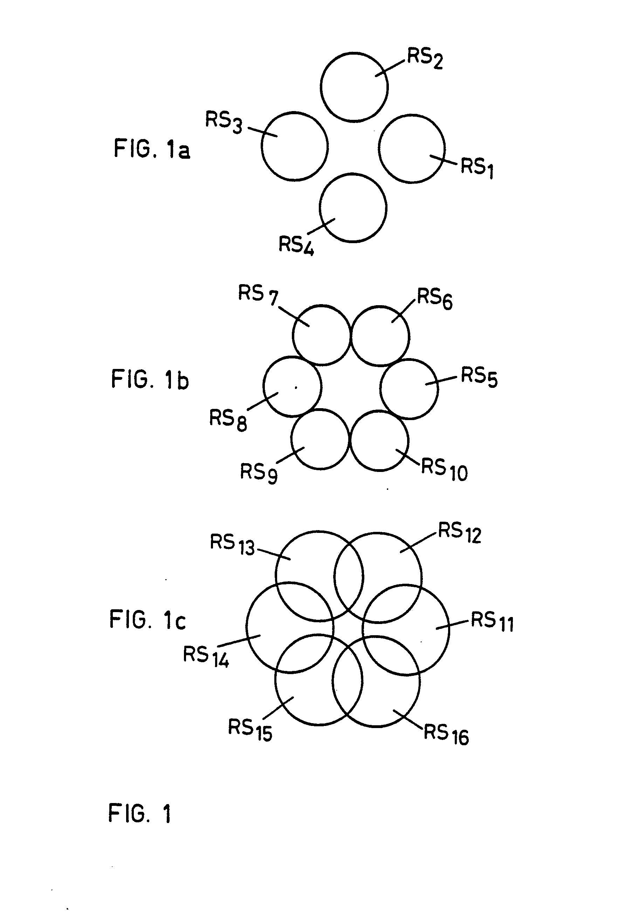

Dabei zeigen die Figuren 1a, 1b und 1c einen Querschnitt durch die Raumwinkelsektoren senkrecht zur Symmetrieachse des Bündels von Raumwinkelsektoren für drei Beispiele von Anordnungen dieser Raumwinkelsektoren.

Gemäss Fig. 1a sind vier Raumwinkelsektoren $RS_1$, $RS_2$, $RS_3$ und $RS_4$ vorgesehen, welche gleichmässig verteilt zu der Hauptstrahlrichtung und sich nicht überlappend angeordnet sind.

Gemäss Fig. 1b sind sechs Raumwinkelsektoren $RS_5$, $RS_6$, $RS_7$, $RS_8$, $RS_9$, $RS_{10}$, welche gleichmässig verteilt zu der Hauptstrahlrichtung angeordnet sind und deren Mantelflächen sich eben berühren, vorgesehen.

Gemäss Fig. 1c sind ebenfalls sechs Raumwinkelsektoren $RS_{11}$, $RS_{12}$, $RS_{13}$, $RS_{14}$, $RS_{15}$, $RS_{16}$, welche gleichmässig verteilt zur Hauptstrahlrichtung angeordnet sind und deren Raumwinkelsektor-Querschnitte sich teilweise überlappen, vorgesehen.

Jedem der Raumwinkelsektoren RS kann nun ein Messkanal zugeordnet werden, mittels welchem die aus dem betreffenden Raumwinkelsektor einfallenden Reflexionen erfasst und ausgewertet werden. Über jeden der Messkanäle werden während des Messvorganges periodisch Entfernungsmesswerte gewonnen.

Ausführungsbeispiele für Messkanäle sind aus dem Stande der Technik bekannt.

Die Verarbeitung der einfallenden Reflexionen wird später beispielsweise erläutert.

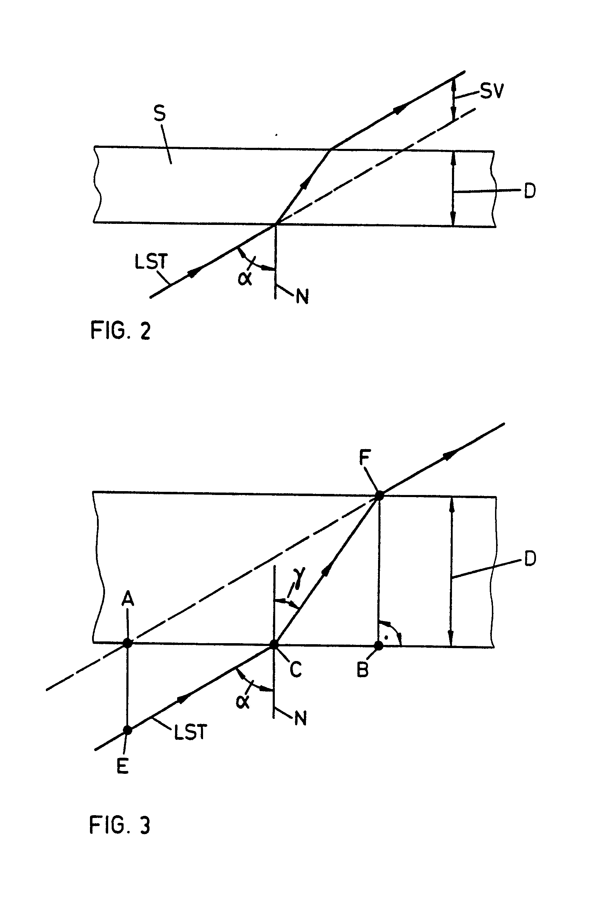

Eine Einrichtung zur Erzeugung von Meßstrahlen, welche in bestimmten, einander zugeordneten Raumwinkelsektoren RS etwa gemäss den Fig. 1a, 1b oder 1c oder ähnlich verlaufen, wird nun anhand der Fig. 2, 3, 4 und 5 beschrieben.

Fig. 2 zeigt, wie ein Lichtstrahl LST, welcher auf eine geneigt zu seiner Richtung verlaufende Glasscheibe S unter einem Einfallswinkel $\alpha$ zur Normalen N auf die Scheibe S einfällt, unter einem Strahlversatz SV weitergeleitet wird. Der Strahlversatz SV ist dabei in Richtung senkrecht zur Ebene der Scheibe S gemessen.

Die Grösse des Strahlversatzes SV hängt hierbei von der Dicke D der Scheibe S und vom Brechungsindex n des Materials der Scheibe S ab. Mit Hilfe der in Fig. 3 dargestellten Zusammenhänge kann der Strahlversatz SV berechnet werden.

Dabei bezeichnet $\alpha$ den Einfallswinkel des Lichtstrahls LST auf die Scheibe S, gemessen zur Normalen N der Scheibe S. $\gamma$ bezeichnet den Brechungswinkel des Materials der Scheibe S und D die Dicke der Scheibe S.

Es ist leicht einzusehen, dass der Winkel AFB = $\alpha$ und der Winkel CFB = $\gamma$ ist, so dass die Strecke AB = D. tg $\alpha$ und die Strecke CB = D. tg $\gamma$ ist. Deshalb ist die Strecke AC = AB - CB = D (tg $\alpha$ - tg $\gamma$) und, weil der

Winkel AEC $\alpha$ ist, so ist die Strecke AE $= \dfrac{AC}{tg\,\alpha}$ und die Strecke AE, also der Strahlversatz SV = D (1 $- \dfrac{tg\,\gamma}{tg\,\alpha}$).

Da das Verhältnis $\dfrac{tg\,\gamma}{tg\,\alpha}$ für kleine Einfallswinkel $\alpha$ in erster Annäherung dem

Verhältnis $\dfrac{sin\,\gamma}{sin\,\alpha} = \dfrac{1}{n}$ gleichzusetzen ist, ist der Strahlversatz SV für kleine Einfallswinkel $\alpha$ erster Annäherung unabhängig vom Einfallswinkel $\alpha$.

Bei grösseren Einfallswinkeln $\alpha$ nimmt das Verhältnis,

$\dfrac{tg\,\gamma}{tg\,\alpha}$ ab, so dass der Strahlversatz SV zunimmt.

Der Maximalwert des Strahlversatzes SV entspricht der Dicke D der Scheibe S und er wird erreicht für den Einfallswinkel $\alpha = 90°$.

5

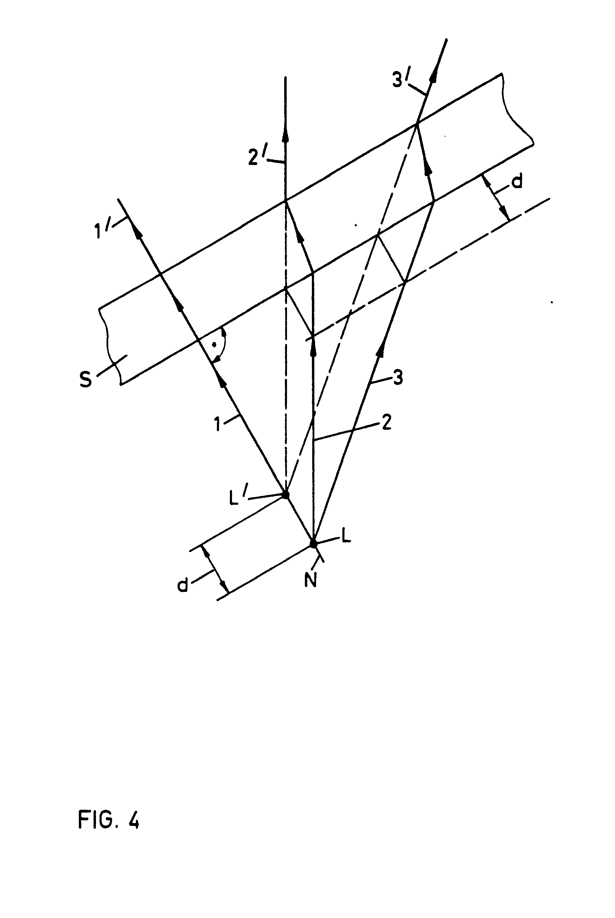

Die Fig. 4 zeigt eine schematische Darstellung einer Vorrichtung zur Bildung von versetzten Strahlenbündeln, welche in verschiedenen Raumwinkelsektoren verlaufen.

Einer Lichtquelle L ist die Scheibe S zugeordnet. Zufolge der geneigten Lage der Scheibe S werden von der Lichtquelle L ausgehende Strahlen 1, 2 und 3 in untesschiedlicher Weise versetzt, derart, dass der Strahl 1, welcher senkrecht auf die Scheibe S auftritt, als nicht versetzter Strahl 1', der Strahl 2 als versetzter Strahl 2' und der Strahl 3 als versetzter Strahl 3' die Scheibe S verlässt. Wenn für die Einfallswinkel der Strahlen 1, 2 und 3 auf die Scheibe S das Verhältnis

$$\frac{tg\ \gamma}{tg\ \alpha}$$ konstant wäre, so würden die versetzten Strahlen

2' und 3' um die gleiche Distanz d in RIchtung der Normalen N auf dei Scheibe S versetzt erscheinen. Dieser hypothetische Fall ist in der Fig. 4 angenommen worden. Alle aus der Scheibe S austretenden Strahlen scheinen demnach für einen jenseits der Scheibe S befindlichen Beobachter aus dem Punkt L' diesseits der Scheibe S zu kommen. Die punktförmig angenommene Lichtquelle L würde in diesem Fall im Punkt L' virtuell abgebildet werden. In Wirklichkeit nimmt jedoch der Strahlversatz, ausgedrückt in der Verschiebung d, bei grösser werdenden Einfallswinkeln zu. Dabei wird die Lichtquelle L nicht mehr genau punktförmig an der Stelle L' virtuell abgebildet. Für eine Scheibe S mit begrenzter Oberfläche und/oder eine Lichtquelle mit begrenztem räumlichem Abstrahlwinkel hat auch die virtuelle Abbildung L' der Lichtquelle L begrenzte Abmessungen.

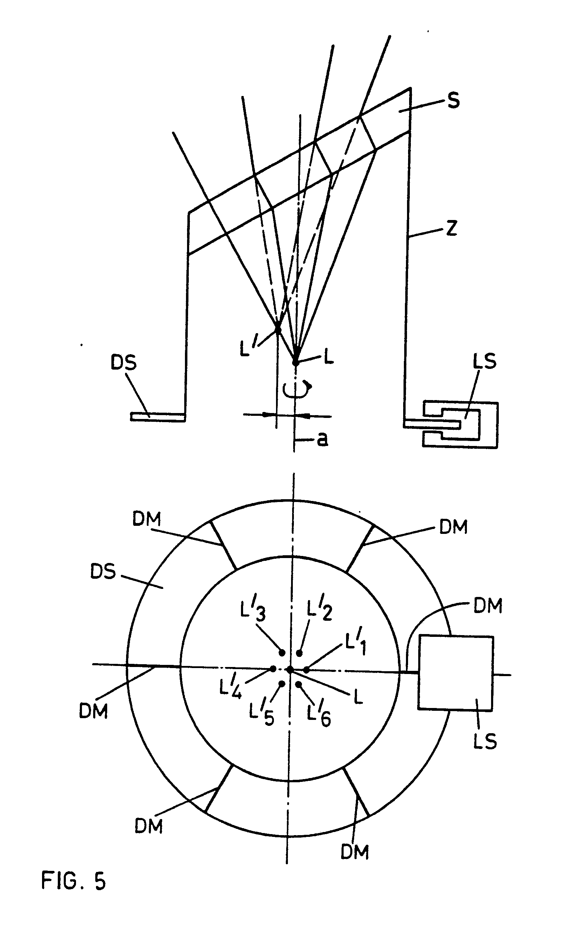

-Die Fig. 5 zeigt eine schematische Darstellung einer Strahlablenkeinheit gemäss dem anhand der Fig. 1 - 4 erläuterten Prinzip mit einer geneigten, um eine Achse a sich drehenden Scheibe S. Die Scheibe S ist in geneigter Lage eingefasst in einen Zylinder Z, welcher zusammen mit der Scheibe S um die Achse a drehbar angeordnet ist. Die Lichtquelle L, beispielsweise eine Laserdiode, liegt auf der Achse a. Die Laserdiode arbeitet in gepulstem Betrieb, so dass bei sich drehendem Zylinder Z mit jedem Puls in unterschiedliche Raumwinkelsektoren RS (siehe Fig. 1a, 1b, 1c) Meßstrahlen ausgesandt werden. Für einen jenseits der Scheibe S befindlichen Beobachter erscheinen dann bei Rotation des Zylinders Z und damit der Scheibe S um die Achse a die virtuellen Abbildungen $L_1''$, $L_2'$, $L_3'$, $L_4'$, $L_5''$ und $L_6''$ der Lichtquelle L auf einem kleinen Kreis um die Lichtquelle L verteilt. Verhältnisse gemäss Fig. 5 bestehen dann, wenn während einer Umdrehung des Zylinders Z sechs Impulse von der Läserdiode abgegeben werden. Dabei wird vorausgesetzt, dass die Impulsdauer der Impulse wesentlich kleiner ist als die Dauer für eine Umdrehung des Zylinders Z. Es wird dann die gleiche Wirkung erzielt, wie wenn die Scheibe S nur sechs diskrete Stellungen einnehmen könnte.

Mit dem Zylinder Z ist auch eine ringförmige Detektionsscheibe DS starr verbunden und diese dreht sich mit der Scheibe S. Auf der Detektionsscheibe DS sind radiale Detektionsmarken DM in gleichmässiger Winkelteilung angebracht. Es sind vorzugsweise gleichviele Detektionsmarken DM angebracht, wie Raumsektoren gebildet werden sollen.

Mittels einer an sich bekannten Lichtschranke LS wird in an sich bekannter Weise die Passage jeder Detektionsmarke DM durch den Lichtstrahl der Lichtschranke erfasst. Die Ausgangssignale der Lichtschranke LS werden einem Taktgeber für den gepulsten Betrieb der Laserdiode, welche die Lichtquelle L darstellt, zugeführt.

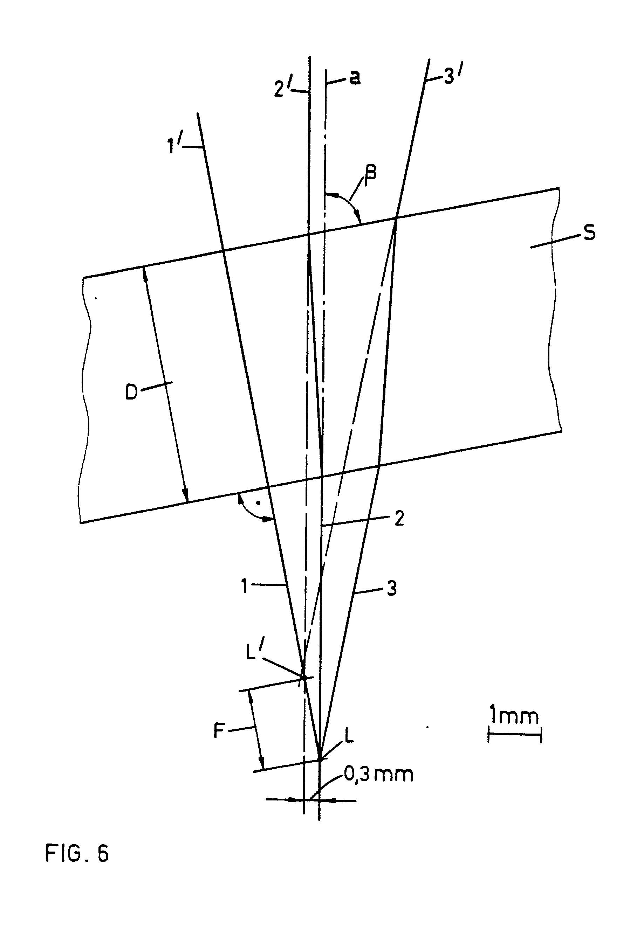

Zu beachten ist, dass die Fig. 4 und 5 nicht maßstablich gezeichnet sind, sondern nur zur prinzipiellen Erläuterung dienen. Eine den praktischen Erfordernissen gerecht werdende Anordnung für die Bildung von Raumwinkelsektoren für die Messstrahlen ist in der Fig. 6 hinsichtlich vorteilhafterweise zu wählender Abmessungen, beziehungsweise Winkel, dargestellt. Bei einer Anordnung nach Fig. 6 ist die Scheibe S im Winkel $\beta = 78,7°$ zur Richtung der Achse a geneigt. Die Scheibe S hat eine Dicke D = 4,49 mm und der Brechungsindex des verwendeten Glases der Scheibe S ist n = 1,5.

In Fig. 6 sind beispielsweise wieder drei Meßstrahlen 1, 2 und 3 eingezeichnet, wobei der Meßstrahl 1 senkrecht auf die Ebene der Scheibe S einfällt und daher keinen Strahlversatz SV erleidet. Der Meßstrahl 1 geht daher ungebrochen in gleicher Richtung aus der Scheibe S hinaus, wie er in diese eingetreten ist. Im Gegensatz dazu wird der Meßstrahl 2, welcher die Lichtquelle L in Richtung der Achse a verlässt, die Scheibe S mit einer seitlichen Verschiebung, aber parallel zur Achse a, als Meßstrahl 2' verlassen. Der Meßstrahl 3 verlässt die Scheibe S ebenfalls mit einem Versatz entsprechend dem dargestellten Meßstrahl 3'.

Alle drei aus der Scheibe S austretenden Meßstrahlen 1', 2' und 3' scheinen für einen jenseits der Scheibe S befindlichen Betrachter von der virtuellen Abbildung L' der Lichtquelle L zu kommen. Diese Fig. 6 ist maßstäblich gezeichnet, und man erkennt, dass die virtuelle Abbildung L' der Lichtquelle L gemäss diesem Beispiel geringfügig, d.h. 0,3 mm neben der Achse a liegt und um den Betrag F = 1,53 mm in Richtung zur Scheibe S gegenüber der Lichtquelle L verlagert ist.

Der Strahlengang gemäss Fig. 6 wurde streng nach dem Snell' schen Gesetz konstruiert, deshalb schneiden sich die Strahlen 1', 2' und 3', wenn sie rückwärtig verlängert sind, nicht genau in einem Punkt. Die auftretenden Abweichungen sind jedoch praktisch vernachlässigbar.

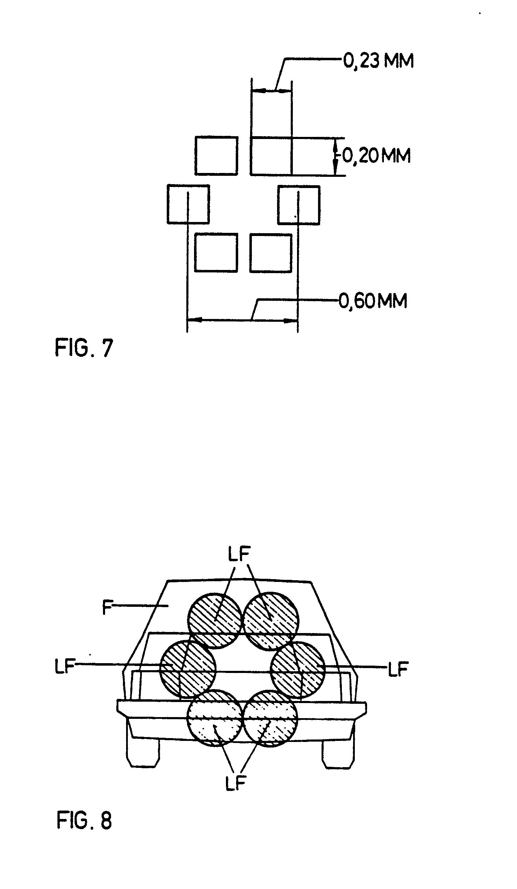

Wird als Lichtquelle L beispielsweise eine Impulslaserdiode des Typs LD 163 der Firma "Laser Diode Laboratories Inc. (1130 Somerset Street, New Brunswick, N.Y. 08901)" in einer Anordnung nach Fig. 6 eingesetzt, so ergibt sich für die sechs virtuellen Abbildungen $L_1'$ $L_2'$ $L_3'$ $L_4'$ $L_5'$ $L_6'$ (siehe Fig. 5) bei einer Umdrehung der Scheibe S ein maßstäbliches Bild gemäss Fig. 7. Es wird also mit einer einzigen Laserdiode die gleiche Wirkung erzielt, wie wenn sechs Laserdioden in der angegebenen Anordnung gemäss Fig. 7 benützt würden. Dies stellt eine beträchtliche konstruktive Vereinfachung dar, welche zudem zu einem erheblich geringeren technischen Aufwand führt.

Die drehbare Scheibe S ist ein Bestandteil der Ablenkeinheit (siehe Fig. 5), für die von der Lichtquelle L ausgehenden optischen Impulse. Eine Sendeoptik hat nun die Aufgabe, die Lichtquelle L unter Berücksichtigung der Stellung der Scheibe S auf dem zu vermessenden Objekt, beispielsweise einem Fahrzeug, in einiger Distanz, beispielsweise 50 - 200 m, abzubilden. Dies kann mittels einer einfachen, an sich bekannten Projektionsoptik erfolgen. Die Brennweite der Sendeoptik sollte dabei so gross gewählt werden, dass auch bei der grossten vorgesehenen Entfernung zu dem zu vermessenden Objekt die durch die Sendeoptik auf demselben erzeugte Abbildung aller virtuellen Lichtquellen $L'_1$, $L'_2$, $L'_3$, $L'_4$, $L'_5$, $L'_6$, also die ganze Gruppe dieser Abbildungen, kleiner ist als die vom zu vermessenden Objekt aus der Sicht der Messvorrichtung angebotene Silhouette.

Bei Abmessungen von 0,228 x 0,202 mm der Leuchtfläche der Laserdiode des genannten Typs würde eine Optik mit einer Brennweite von 100 mm genügen zur Erzeugung eines Brennflecks auf dem zu vermessenden Fahrzeug mit einem Druchmesser von weniger als 0,5 mm Durchmesser bei einer Entfernung von 200 m zwischen Messvorrichtung und Fahrzeug.

Der von der Sendeoptik auf ein zu vermessendes Fahrzeug F in 200 m Entfernung projizierte Lichtfleck LF würde das Fahrzeug, beispielsweise etwa wie in Fig. 8 durch schraffierte Kreisflächen dargestellt, treffen. Dabei ist die Form der Lichtflecken LF der Einfachheit halber rund gezeichnet. Die früher genannte Laserdiode hat jedoch eine rechteckige Leuchtfläche. Die Ablenkeinheit 100 wird jedoch die Leuchtflächen nur etwas verzerrt abbilden. Die Sendeoptik wird auch nur auf eine ganz bestimmte Distanz eine scharfe Abbildung erzeugen. Alle diese Abweichungen vom Idealfall führen dazu, dass die tatsächliche Form der Lichtflecken LF annähernd rund wird.

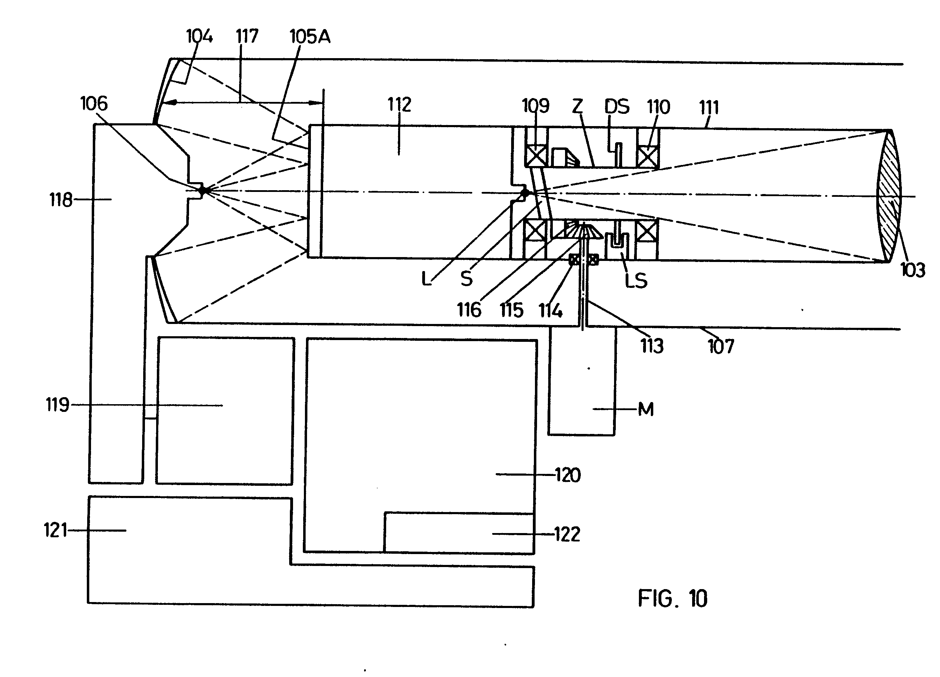

Mit der eben beschriebenen Einrichtung ist es also möglich, beispielsweile in sechs benachbarten Raumwinkelsektoren optische Impulse als Meßstrahlen gegen das zu vermessende Fahrzeug F zu richten und dort Lichtflecken LF zu erzeugen. Entsprechend der Anzahl der gewählten Raumwinkelsektoren entsteht demnach eine Gruppe von gleichviel Lichtflecken auf dem vermessenen Fahrzeug. Vorzugsweise verwendet man unsichtbares, beispielsweise infrarotes Licht. Beispiele für praktische Ausführungen der Sendeoptik werden später anhand der Fig. 10 näher erläutert.

Am vermessenen Objekt, beispielsweise dem Fahrzeug F, werden die auftreffenden Meßstrahlen wenigstens teilweise reflektiert und ein Teil der reflektierten Energie wird auch zur Geschwindigkeitsmessvorrichtung zurückgeworfen und wird dort von deren Empfangsoptik aufgenommen.

Die Empfangsoptik hat dabei die Aufgabe, von der aufgenommenen reflektierten Strahlung einen möglichst grossen Teil einer lichtempfindlichen Empfangsdiode fokussiert zuzuführen.

Die Brennweite der Empfangsoptik ist vorzugsweise so gross zu wählen, dass die auf dem vermessenen Objekt erzeugten Lichtflecken LF in ihrer Gesamtheit, also für alle Raumwinkelsektoren gemeinsam, auf der lichtempfindlichen Fläche der Empfangsdiode abgebildet werden.

Als Empfangsdiode wird beispielsweise eine Avalanchediode des Typs C 30902E der Firma RCA Corp., Saint Anne de Bellevue, Quebec, Canada, H9X3L3, verwendet. Die lichtempfindliche Fläche dieser Diode hat einen Durchmesser von 0,5 mm.

Bei Verwendung einer Empfangsoptik mit der gleichen Brennweite wie bei der Sendeoptik wird das auf die Empfangsdiode abgebildete Lichtfleckmuster der Sendeeinrichtung einen Durchmesser aufweisen, der drei mal so gross ist wie die Leuchtfläche der Sendediode (dies wegen der hier angenommenen Anordnung von sechs Raumwinkelsektoren). Der Durchmesser dieser empfangsseitigen Abbildung wird also im angenommenen Fall drei mal 0,228 = 0,684 mm betragen.

Zur Verringerung dieses Durchmessers zwecks Anpassung des abgebildeten Leuchtflächenmusters auf den Durchmesser von 0,5 mm der Empfangsdiode sollte daher die Brennweite der Empfangsoptik vorzugsweise

$$\frac{0,684}{0,5} = \text{ca. 1,4 mal kleiner gewählt werden}$$

als die Brennweite der Sendeoptik. Beispielsweise sollte bei einer Sendeoptik mit einer Brennweite von 140 mm die Empfangsoptik eine Brennweite von etwa 100 mm aufweisen.

Die Anordnung der Empfangsoptik relativ zur Sendeoptik sollte vorzugsweise so gewählt werden, dass alle Lichtflecken des gesamten Lichtfleckenmusters bei allen Messentfernungen von der Empfangsoptik möglichst vollständig auf der lichtempfindlichen Fläche der Empfangsdiode zur Abbildung gelangen. Bei eeiner seitlichen Anordnung achsparalleler Optiken wird diese Forderung nur in einem begrenzten Entfernungsbereich erfüllbar, wenn man die Brennweite der Empfangsoptik nicht kürzer machen möchte als unbedingt erforderlich.

Zur Gewährleistung der entfernungsunabhängigen Abbildung der Leuchtflächen auf die Empfangsdiode sollten daher die Achsen der Empfangsoptik und der Sendeoptik zusammenfallen. Dies kann praktisch realisiert werden mittels einer konzentrischen Anordnung der beiden Optiken.

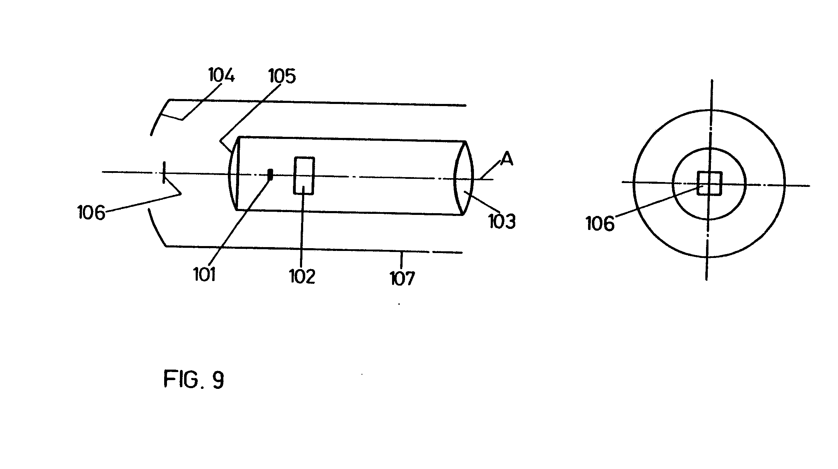

Die Fig. 9 zeigt schematisch eine besonders vorteilhafte Anordnung der Sende-Empfangsoptiken. Dabei stellt a die Hauptachse beider Optiken dar. Als Lichtquelle L ist eine Laserdiode 101 vorgesehen, welcher die Ablenkeinheit 102 und die Sendeoptik 103 zugeordnet sind. ..

Die Empfangsoptik ist gemäss dem Beispiel nach Fig. 9 als sogenannte Cassegrain-Anordnung ausgebildet mit einem Parabolspiegel 104, welchem ein Hyperbelspiegel 105 gegenübersteht. Die durch den Zylinder 107 von rechts einfallende, vom zu vermessenden Objekt reflektierte Strahlung wird vom Parabolspiegel 104 über den Hyperbelspiegel 105 auf die Empfangsdiode 106 fokussiert, welche daraus ein elektrisches Signal bildet, das weiter verarbeitet wird.

Cassegrain-Optiken sind an sich bekannt, siehe beispielsweise das Buch "Optik für Konstrukteure", von Dr. Helmut Naumann, dritte Auflage, Wilhelm Knapp-Verlag, Düsseldorf N, BRD, Seite 150, Abbildung 206.

Nachdem vorstehend Grundprobleme der Erfindung erläutert wurden, folgt nun eine detaillierte Beschreibung eines Ausführungsbeispiels.

Die Fig. 10 zeigt schematisch, teils im Schnitt und teils als Blockschaltbild, den Aufbau einer erfindungsgemäßen Vorrichtung. Senderseitig ist die Lichtquelle L, die geneigte, drehbar gelagerte Scheibe S, die Detektionsscheibe DS sowie die Lichtschranke LS montiert am Zylinder Z. Dieser Zylinder Z ist in zwei Lagern 109 und 110 in einem Rohr 111 drehbar gelagert.

Im linken Teil des Rohres 111 ist eine Senderspeisung 112 untergebracht, welche alle elektronischen Teile für den gepulsten Betrieb der Lichtquelle L aufweist. Am linken Ende des Rohres 111 ist ein Spiegel 105A angebracht, welcher bereits zum Empfangssystem gehört.

Durch einen ausserhalb des Rohres 111 angebrachten Motor M wird über eine Welle 113, welche in einem Lager 114 gelagert ist, ein Kegelrad 115 angetrieben. Das Kegelrad 115 steht im Eingriff mit einem ringförmigen weiteren Kegelrad 116, welches starr auf dem Zylinder Z befestigt ist. Bei laufendem Motor M wird daher der Zylinder Z mitsamt der in ihm befestigten Scheibe S und der Detektionsscheibe DS in den Lagern 109 und 110 in Rotation versetzt, wobei das von der Lichtquelle L austretende Lichtbündel in die beabsichtigten Raumwinkelsektoren RS abgelenkt wird. Da die Lichtquelle L, wie früher erwähnt, nur impulsmässig und koordiniert mit der Rotation der Scheibe S betrieben wird, werden die diskreten Lichtimpulse jeweils koordiniert in die zugehörigen Raumwinkelsektoren RS abgelenkt.

Am rechten Ende des Rohres 111 ist die Sendeoptik 103 befestigt, mittels welcher die virtuellen Lichtflecken $L'_1$ bis $L'_6$, siehe Fig. 5, 6 und 7, auf dem zu vermessenden objekt abgebildet werden.

Die Empfangsoptik 117 besteht in diesem Ausführungsbeispiel nach Fig. 10 aus dem ringförmigen Parabolspiegel 104 und dem ihm gegenüberliegenden ebenen Spiegel 105A. Anstelle des ebenen Spiegels 105A könnte auch ein Hyperbelspiegel 105 gemäss Fig. 9 vorgesehen werden.

Im Fokus des Spiegelsystems 104 und 105A ist die Empfangsdiode 106 angeordnet, welche elektrisch am Eingang eines Empfängers 118 liegt.

Auf den Empfänger 118 folgt eine Entfernungsmesseinrichtung 119, welche die Ausgangssignale des Empfängers 118 verarbeitet.

Ein Mikrorechner 120 ist für die Steuerung des Messablaufes und die Ausführung von verschiedenen Funktionen, welche später erläutert werden, vorgesehen. Eine Speiseeinheit 121 dient der Stromversorgung der verschiedenen Bauteile. Eine Anzeigeeinheit 122 dient der Anzeige der unter Mithilfe des Mikrorechners 120 errechneten Geschwindigkeit des vermessenen Objektes.

Der Empfänger 118 ist in an sich bekannter Weise aufgebaut, beispielsweise in Anlehnung an die deutsche Offenlegungsschrift 2.723.835 beziehungsweise entsprechende US Patentschrift 4.181.431. Aus dem Stande der Technik sind weitere Angaben für optische Empfänger für die Distanzmessung bekannt.

Der Entfernungsmeßschaltung 119, welche beispielsweise in Anlehnung an DOS 2.723.835 gebaut sein kann, werden Paare von Impulsen zur Auswertung zugeführt. Der erste Impulse eines solchen Impulspaares markiert den Zeitpunkt der Aussendung eines Impulses und der zweite Impuls entsteht beim Empfang eines an einem vermessenen Objekt reflektierten und bei der Messeinrichtung eintreffenden Impulses. Eine der Laufzeit des ausgesandten Impulses zum zu vermessenden Objekt und zurück zur Geschwindigkeitsmesseinrichtung entsprechende analoge Spannung wird am Ausgang der Entfernungsmesseinrichtung 119 einem in Fig. 10 nicht gezeichneten Analog-Digital-Wandler zugeführt.

Der Mikrorechner 120 erfüllt die folgenden Aufgaben:

1. Steuerung des Messablaufs wie später ausführlich beschrieben.

2. Einlesen der vom genannten Analog-Digital-Wandler in digitalem Code ausgegebenen Entfernungswerte zum zu vermessenden Objekt.

3. Prüfen und Auswerten der gemessenen Entfernungswerte.

4. Ableiten und Prüfen eines zuverlässigen Geschwindigkeitsmesswertes. ·

5. Ausgeben des errechneten Geschwindigkeitsmesswertes an den Anzeigedecodierer und Anzeigetreiber.

Der Mikrorechner 120 ist hiezu verbunden mit:

a. einem Start-Stop-Eingang der später beschriebenen Senderauslöseschaltung und Antriebsregelschaltung,

b. dem Ausgang der Senderauslöseschaltung,

c. den Ausgängen des genannten Analog-Digital-Wandlers,

d. einem Eingang des Analog-Digital-Wandlers zur Durchgabe der Umwandlungsbefehle,

e. den Eingängen des Anzeige-Decodierers und Anzeige-TTreibers,

f. einer Start-Stop-Taste.

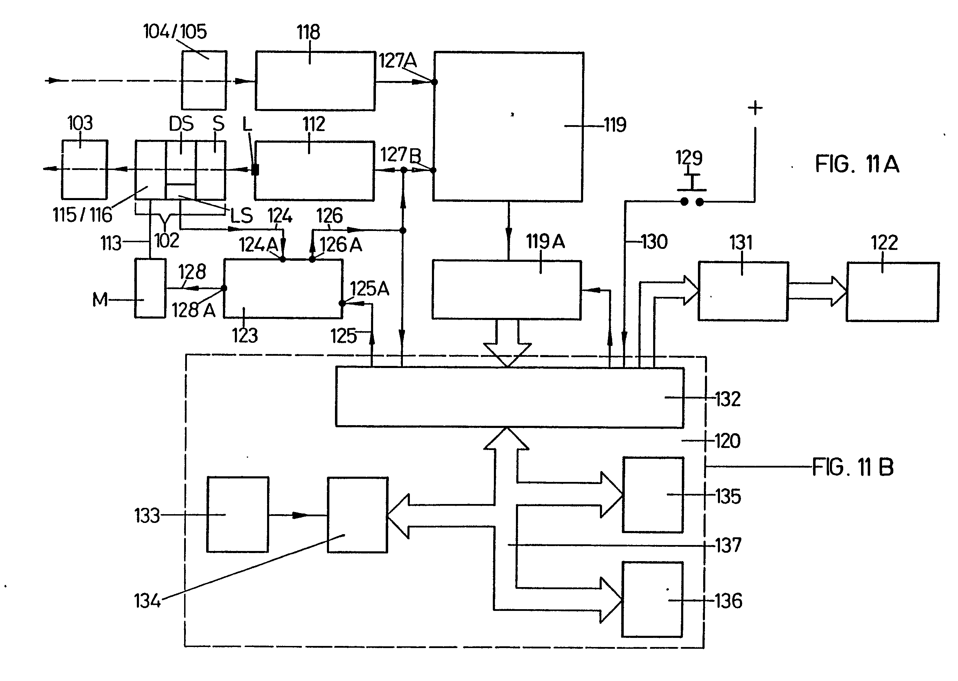

Die Fig. 11a und 11b zeigen ein Block- und Funktionsschema der Geschwindigkeitsmesseinrichtung. Darin sind die Teile, soweit sie bereits beschrieben worden sind, mit den dort verwendeten Bezugszeichen versehen.

In der Fig. 11a erkennt man den Sender 112 mit der Lichtquelle L, die Scheibe S zur Strahlablenkung mit der

**0 082 243**

Detektionsscheibe DS, welche die Detektionsmarken DM trägt, für die Steuerung der Sendeimpulsfolge mittels der Lichtschranke LS. Der zugehörige Antrieb erfolgt über den Motor M, die Welle 113 und die Kegelräder 115 und 116. Die von der Lichtquelle L abgegebenen Impulse werden durch die definierte Position der Ablenkscheibe S jeweils in definierte Raumwinkelsektoren geschickt, und sie werden durch die Sendeoptik 103 auf das zu vermessende Objekt abgebildet.

Reflektierte Impulse gelangen über die Empfangsoptik 104, 105 auf den Empfänger 118, dessen Ausgangsimpulse einem Stop-Eingang 127A der Entferungsmeßschaltung 119 zugeführt werden. Über den Analog-Digital-Wandler 119A gelangen die Entfernungsmesswerte der Entfernungsmeßschaltung 119 an den Mikrorechner 120 zur weiteren Verarbeitung.

Damit die Senderimpulse in genau definierte Raumwinkelsektoren RS ausgesandt werden, wird der Motor M für die Ablenkeinheit 102 durch eine Steuereinheit 123 gesteuert.

Der Steuereinheit 123 werden einerseits von der Lichtschranke LS der Ablenkeinheit 102 die aus der Passage von Detektionsmarken DM erzeugten Steuerimpulse über eine Leitung 124 zugeführt und andererseits erhält die Steuereinheit 123 dem Messablauf entsprechende Befehle über eine Leitung 125 aus dem Mikrorechner 120 zugeführt. Die Senderauslöseimpulse der Steuereinheit 123 gelangen über eine Leitung 126 sowohl zum Sender 112 als auch zu einem Starteingang 127B der Entfernungsmeßschaltung 119 und auch zurück zum Mikrorechner 120. Ausserdem wird von der Steuereinheit 123 über eine Leitung 128 dem Motor M der Ablenkeinheit 102 ein genau dosierter Antriebsstrom zugeführt, derart, dass die Detektionsscheibe DS nicht nur die korrekte Drehzahl, sondern auch die korrekte Phasenlage einnimmt und diese während der Messung beibehält. Zur Einleitung einer Messung, nachdem die Geschwindigkeitsmesseinrichtung auf ein bestimmtes zu vermessendes Objekt optisch ausgerichtet ist, beispielsweise mittels eines bekannten Visiers oder optischen Suchers, ist eine Starttaste 129 vorgesehen. Wird die Starttaste 129 betätigt, so wird über eine Leitung 130 dem Mikrorechner 120 ein Startsignal zur Auslösung eines Messablaufs zugeführt.

Der Mikrorechner 120 seinerseits steuert nach erfolgreichem Ablauf einer Messung über einen Dekodier- und Anzeigetreiber 131 die Anzeigeeinheit 122.

Die Fig. 11b zeigt schematisch den Aufbau des Mikrorechners 120 mit seiner Eingabe-Ausgabeeinheit 132, einem Taktgeber 133, einer Zentraleinheit 134, einem Festwertspeicher 135, einem Schreib-Lesespeicher 136 und einer Sammelschiene 137.

Die Steuereinheit 123 hat, wie aus Fig. 11a, b ersichtlich ist, zwei Eingänge und zwei Ausgänge. Ihr erster Eingang 125A ist über die Leitung 125 mit der Eingabe-Ausgabeeinheit 132 des Mikrorechners 120 verbunden. Ihm wird ein Signal zugeführt, welches am Anfang einer Messung von logisch "0" auf logisch "1" wechselt, während der Messung aber auf logisch "1" bleibt und bei Abschluss der Messung auf logisch "0" zurückfällt.

Der zweite Eingang 124A ist mit dem Ausgang an der Lichtschranke LS der Ablenkeinheit 102 verbunden und erhält jedes Mal, wenn eine Detektionsmarke DM der Detektionsscheibe DS die Lichtschranke durchläuft, einen Impuls.

Die Antriebsregelschaltung in der Steuereinheit 123 hat die Aufgabe, während der Dauer einer Messung über ihren Ausgang 128A und die Leitung 128 den Antriebsmotor M so zu steuern, dass die Scheibe S sich bei Auslösung des Senders in jeweils genau definierter Position befindet. Unmittelbar nach Anfang einer Messung wird dies zufolge der Trägheit der Ablenkeinheit 102 noch nicht der Fall sein. Erst nach Beschleunigung der Ablenkeinheit auf die Soll-Drehzahl und nach Erreichen einer genauen Phasenlage ist der gewünschte Zustand erreicht.

Die Senderauslöseschaltung der Steuereinheit 123 hat daher die Aufgabe, erst nach Erreichen dieses gewünschten Zustandes der Scheibe S dem Sender über ihren weiteren Ausgang 126A und die Leitung 126 eine Reihe von Auslöseimpulsen mit genau bestimmten und sehr konstanten Zeitintervallen zuzuführen. Diese genauen Zeitintervalle der Senderimpulse bilden die Basis für die Geschwindigkeitsbestimmung des vermessenen Objektes. Die Ablenkscheibe S muss sich deshalb bei Auslösung des Senders in einer genau definierten Lage befinden, weil das zu vermessende Objekt jeweils an einer bestimmten von mehreren möglichen Stellen auf demselben durch die jeweiligen Meßstrahlen vermessen werden muss.

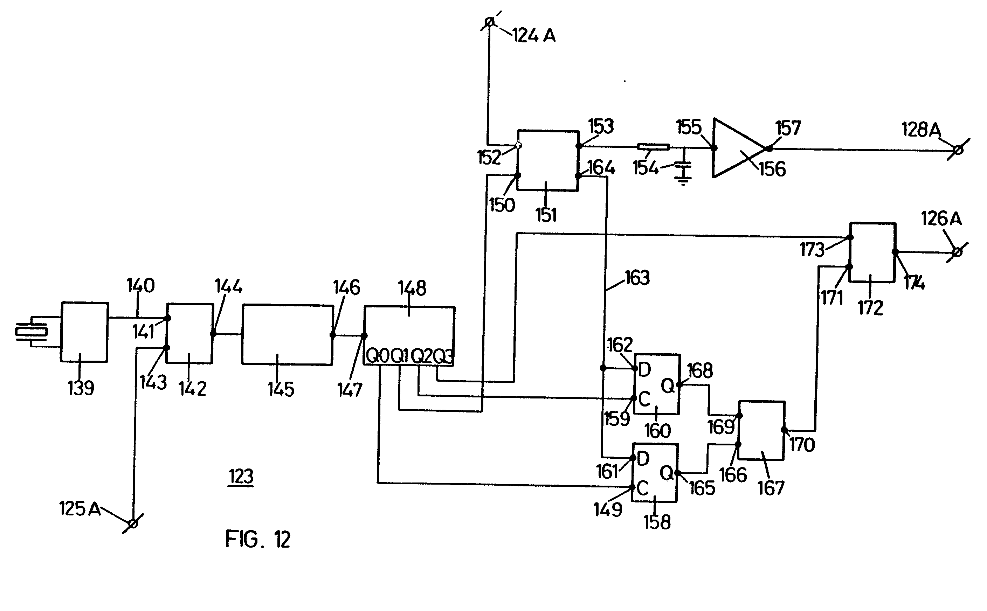

Die Fig. 12 zeigt ein Blockschaltbild eines Beispiels einer Senderauslöse- und Antriebsregelschaltung 123. Als Grundlage für die Erzeugung von Sendeimpulsen mit exakter Repetitionsfrequenz ist ein Quarzoszillator 139 bekannter Art vorgesehen mit einer Frequenz von beispielsweise 1,53600 MHz. Dessen Ausgangssignal wird über eine Leitung 140 einem ersten Eingang 141 eines UND-Tores 142 zugeführt, dessen zweiter Eingang 143 über den Eingang 125A und die Leitung 125 mit der Ein-Ausgabeeinheit 132 verbunden ist (Fig. 11a, 11b). Nur während des Ablaufes einer durch die Betätigung der Start-Stop-Taste 129 veranlassten Messung erscheint das quarzgenaue Rechtecksignal deshalb am Ausgang 144 des UND-Tores 142.

Als Repetitionsfrequenz für die Senderimpulse hat sich eine Frequenz von beispielsweise 100 Hz pro Kanal, bei sechskanaliger Bauart also 600 Hz, als vorteilhaft erwiesen, und da Quarze für eine so tiefe Frequenz nur schwer herzustellen sind, wird die ursprünglich gewählte Quarzfrequenz von beispielsweise 1,53600 MHz in bekannter Weise mittels eines Frequenzteilers im Verhältnis $2^8 = 256$ untersetzt. Diese untersetzte Frequenz von 6000 Hz wird am Ausgang 146 des Frequenzteilers 145 abgegeben.

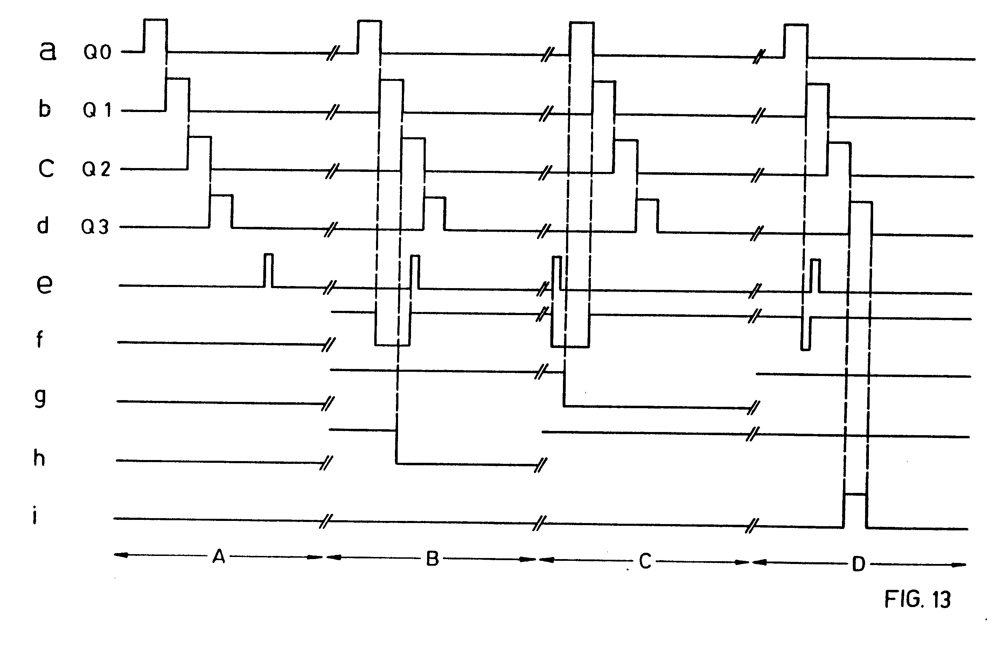

Im angenommenen Beispiel mit einer Repetitionsfrequenz der Senderimpulse von 600 Hz wird der Frequenzteiler 145 daher so ausgebildet, dass er an seinem Ausgang 146 ein Rechtecksignal mit einer Frequenz von 6000 Hz abgibt. Diese Frequenz wird dem Eingang 147 eines Johnson-Zählers 148 zugeführt. Ein solcher Johnson-Zähler ist an sich bekannt, siehe beispielsweise CMOS Databook Fairchild, Ausgabe 1977, Seite 7 - 33, Bauteil 4017B. Im vorliegenden Anwendungsfall werden nur die vier Ausgänge $Q_0$, $Q_1$, $Q_2$, $Q_3$ benützt, um,

9

wie in Fig. 13 dargestellt, zeitlich versetzte Impulsfolgen mit einem Impulstastverhältnis von 1: 10 zu erzeugen. Die Impulsfolge vom Ausgang $Q_0$ wird dem Takteingang 149 eines ersten Flip-Flops 158 zugeführt. Die Impulsfolge vom Ausgang $Q_1$ wird einem ersten Eingang 150 eines Komparators 151 zugeführt. Einem weiteren Eingang 152 dieses Komparators 151 wird vom Eingang 124A (siehe auch Fig. 11a) das Ausgangssignal der Lichtschranke LS zugeführt. Als Phasenkomparator kann beispielsweise ein Baustein 4046B gemäss Seiten 7 - 93 bis 7 - 97 des früher erwähnten Databook Fairchild vorgesehen sein. Das Regelausgangssignal des Phasenkomparators wird vom Regelausgang 153 über einen Tiefpass 154 an den Eingang 155 eines Leistungsverstärkers 156 geführt. Das Ausgangssignal des Leistungsverstärkers 156 wird von dessen Ausgang 157 über den Ausgang 128A zum Motor M geführt (siehe Fig. 11a).

Die Impulsfolge vom Ausgang $Q_2$ wird dem Takteingang 159 eines zweiten D-Flip-Flop 160 zugeführt.

Dem D-Eingang 161 des ersten Flip-Flop 158 und dem D-Eingang 162 des D-Flip-Flop 160 wird über eine Leitung 163 vom Kontrollausgang 164 des Phasenkomparators 151 ein Kontrollsignal zugeführt.

Der Q-Ausgang 165 des ersten D-Flip-Flop 158 ist an einen ersten Eingang 166 des zweiten UND-Tores 167 geführt.

Der Q-Ausgang 168 des zweiten D-Flip-Flop 160 ist an einen zweiten Eingang 169 des zweiten UND-Tores 167 geführt. Der Ausgang 170 des zweiten UND-Tores 167 ist mit einem ersten Eingang 171 eines dritten UND-Tores 172 verbunden, während einem zweiten Eingang 173 des dritten UND-Tores 172 die Impulsfolge vom Ausgang $Q_3$ des Johnson-Zählers 148 zugeführt ist.

Durch die beschriebene Signalverknüpfung wird am Ausgang 174 des dritten UND-Tores 172 das Senderauslösesignal gebildet und an den Ausgang 126A der Senderauslöse- und Antriebsregelschaltung 123 geführt (vergleiche auch Fig. 11a).

Die Fig. 13 zeigt für die vier Zeitabschnitte A, B, C und D in den Zeilen a, b, c und d schematisch Impulsdiagramme, wie sie an den Ausgängen $Q_0$, $Q_1$, $Q_2$ und $Q_3$ des Johnson-Zählers 148 erscheinen. Demgegenüber zeigt die Zeile e für die gleichen Zeitabschnitte eine Impulsfolge, welche das Ausgangssignal der Lichtschranke LS darstellt.

Die Zeile f zeigt den Signalverlauf am Kontrollausgang 164 des Phasenkomparators 151 und damit an den D-Eingängen des ersten und des zweiten Flip-Flop 158 beziehungsweise 160.

Die Zeilen g und h zeigen den Signalverlauf am Ausgang 165, beziehungsweise 168 des ersten Flip-Flop 158, beziehungsweise des zweiten Flip-Flop 160.

Schliesslich zeigt die Zeile i das Auftreten eines an die Impulsfolge am Ausgang $Q_3$ des Johnson-Zählers 148 gebundenen Senderauslösesignals im Zeitabschnitt D, in welchem Umdrehungszahl und Phasenlage der Detektionsscheibe DS und damit die Position der Scheibe S stimmen.

Zu diesen genannten Impulsdiagrammen ist nun noch ergänzend zu bemerken:

Durch den Quarzoszillator 139, und den Frequenzteiler 145 mit dem nachgeschalteten Johnson-Zähler 148 wird an dessen Ausgängen $Q_0$, $Q_1$, $Q_2$ und $Q_3$ ein exaktes Zeitraster gebildet.

Die Ablenkeinheit 102 (siehe Fig. 11a) ist über die Detektionsscheibe DS mit ihren durch die Lichtschranke LS erfassten Detektionsmarken DM frequenzmässig und phasenmässig über den Phasenkomparator 151, den Tiefpass 154, den Leistungsverstärker 156 und den Motor M in ein Regelsystem einbezogen.

Dieses Regelsystem umfasst den Phasenkomparator 151, in welchem die Drehzahl und die Phasenlage der Ablenkeinheit 102 in Beziehung gebracht wird zu dem genannten Zeitraster.

In Fig 13 ist im Zeitabschnitt A gemäss Zeile e weder die Drehzahl der Scheibe S noch die Phasenlage des Ausgangssignals der Lichtschranke LS in Übereinstimmung mit dem Zeitraster. Demzufolge wird durch die Anordnung der Flip-Flop 158 und 160 und das UND-Tor 172 noch kein Senderauslösesignal freigegeben.

Im Zeitabschnitt B hat die Ablenkscheibe S zwar die gewünschte Drehzahl erreicht, und dadurch hat auch das Ausgangssignal der Lichtschranke LS gemäss Fig. 13, Zeile e die Sollfrequenz erreicht. Die Impulse der Lichtschranke eilen jedoch den Impulsen am Ausgang $Q_1$ des Johnson-Zählers noch zuviel nach. Der Kontrollausgang 164 des Phasenkomparators 151 ist deshalb zurzeit der ansteigenden Flanke des Impulses am Ausgang $Q_2$ des Johnson-Zählers 148 noch auf logisch "0" und es liegt deshalb am Eingang 162 des Flip-Flop 160 der Wert logisch "0" und infolgedessen können am Ausgang des UND-Tores 172 noch keine Sendeauslöseimpulse erscheinen.

Im Abschnitt C hat zwar das Ausgangssignal der Lichtschranke LS immer noch die korrekte Frequenz, die gewünschte Phasenlage ist aber noch nicht erreicht, denn die Lichtschrankenimpulse der Zeile e eilen in diesem Abschnitt den Impulsen vom Ausgang $Q_1$ des Johnson-Zählers noch zuviel vor. Der Kontrollausgang 164 ist deshalb zur Zeit der ansteigenden Flanke des Impulses am Ausgang $Q_0$ des Johnson-Zählers bereits auf dem Wert logisch "0", und es wird deshalb dieser Wert an den Eingang 161 des Flip-Flop 158 abgegeben. Demzufolge vermögen die Impulse vom Ausgang $Q_3$ des Johnson-Zählers immer noch nicht bis zum Ausgang 174 des UND-Tores 172 zu gelangen.

Erst im Zeitabschnitt D ist bei korrekter Drehzahl der Scheibe S und entsprechend korrekter Frequenz der Impulse von der Lichtschranke LS auch der Phasenunterschied zwischen diesen Impulsen und den Impulsen am Ausgang $Q_1$ des Johnson-Zählers so klein, dass sowohl in das erste Flip-Flop 158 als auch in das zweite Flip-Flop 160 gleichzeitig der logische Zustand "1" eingegeben wird. Demzufolge sperrt nun das UND-Tor 172 nicht mehr und die vom Ausgang $Q_3$ des Johnson-Zählers 148 stammenden Impulse erscheinen nun als Senderauslösesignale am Ausgang 126A der Senderauslöse- und Antriebsregelschaltung 123 (vergleiche Fig. 11a).

Durch die strikte Bindung der Bewegung der Scheibe S an das genannte Zeitraster nimmt diese Scheibe zu den festen Zeitpunkten der Auslösung der Senderimpulse stets winkelmässig exakt definierte Stellungen ein. Die von der Lichtquelle L, zum Beispiel einer Laserdiode, durch die Senderimpulse ausgelösten optischen, beispielsweise infraroten Impulse, werden daher durch die Scheibe S in ganz genau definierte Raumwinkelsektoren RS abgelenkt. Da im angenommenen Ausführungsbeispiel 600 Impulse pro Sekunde erzeugt werden und die Scheibe S sich mit 100 Umdrehungen pro Sekunde dreht, werden in sechs definierte Raumwinkelsektoren pro Sekunde je 100 Impulse ausgesandt. Bei Ausrichtung der Vorrichtung gegen ein bestimmtes Objekt, beispielsweise ein Auto, werden daher auf dem zu vermessenden Objekt beispielsweise gemäss Fig. 1b sechs Lichtflecke erzeugt. Ein Teil der ausgesandten Energie wird zur Vorrichtung zurückreflektiert, und aus der Laufzeit der dort empfangenen reflektierten Impulse können in bekannter Weise die momentanen Entfernungen zum vermessenen Objekt errechnet werden. Nachfolgend wird nun der Messablauf im einzelnen beschrieben.

Die Vorrichtung ist, wie erwähnt, vorzugsweise etwa in der Art einer Filmkamera gestaltet und hat ein vorzugsweise optisches Suchersystem bekannter Art, um die Vorrichtung beziehungsweise ihre Hauptstrahlrichtung HS möglichst exakt auf das zu vermessende Objekt auszurichten.

Sobald die Hauptstrahlrichtung HS der Vorrichtung genau auf die Frontseite eines sich nähernden Autos oder die Heckseite eines sich entfernenden Autos gerichtet ist, wird die Starttaste 129 (vergleiche Fig. 11a) gedrückt und dadurch ein Messablauf ausgelöst. Es ist wichtig, während des ganzen Messablaufs die Vorrichtung möglichst genau auf das zu vermessende Objekt ausgerichtet zu halten. Die Vorrichtung sollte also einem sich bewegenden Objekt nachgeführt werden unter möglichster Vermeidung von momentanen Lageschwankungen der Vorrichtung. Eine handliche Gestaltung der Vorrichtung ist deshalb vorteilhaft. Dabei kann auch ein beispielsweise aus der Fotografie bekanntes, sogenanntes Einbeinstativ benutzt werden, um eine ruhigere Ausrichtung der Vorrichtung zu gewährleisten.

Mit dem Drücken der Starttaste 129 wird einem Eingang der Eingabe-Ausgabeeinheit 132 des Mikrorechners 120 (siehe Fig. 11a, 11b) ein Signal logisch "1" eingegeben. In der Folge gibt der Mikrorechner an einen Start-Stop-Ausgang über die Leitung 125 ein Signal "1" an den Eingang 125A der Senderauslöse- und Antriebsregelschaltung 123 ab. Dadurch wird die Abgabe des frequenzgenauen Signals des Quarzoszillators 139 über das UND-Tor 142 in bereits anhand der Fig. 12 beschriebenen Weise zur Bildung des genannten exakten Zeitrasters freigegeben.

Der Antriebsmotor M der Ablenkeinheit 102 läuft an und mit dem Erreichen der Soll-Drehzahl und der exakten Phasenlage der Detektionsscheibe DS und damit der Scheibe S selbst werden in die vorgesehenen Raumwinkelsektoren RS die optischen Messstrahlen gesandt. Der Mikrorechner 120 verweilt seit der Erteilung des Startsignals über die Starttaste 129 in einer Warteschleife bis er an seinem diesbezüglichen Eingang den ersten Senderauslöseimpuls feststellt.

Eine kurze Zeitspanne nach Feststellung eines Senderauslöseimpulses, während welcher die Entfernungsmeßschaltung 119 (siehe Fig. 11a) einen Entfernungsmesswert zum zu vermessenden Objekt bestimmt und als analoge Spannung an den Analog-Digital-Wandler 119A weitergibt, erteilt der Mikrorechner 120 dem Analog-Digital-Wandler 119A einen Umwandlungsbefehl. Wiederum eine gewisse Zeitspanne nach diesem Umwandlungsbefehl, während welcher der Analog-Digital-Wandler 119A den analogen Entfernungswert in einen Digital-Code umgewandelt hat, liest der Mikrorechner 120 den digitalisierten Entfernungswert ein.

Nach dem Einlesen eines Entfernungswertes werden damit verschiedene Operationen vom Mikrorechner 120 ausgeführt. Nach dem Ablauf dieser Operationen werden verschiedene Entscheidungen in Abhängigkeit von den gewonnenen Ergebnissen getroffen. Diese Operationen und Entscheidungen werden später im einzelnen beschrieben. Hier sei nur erwähnt, dass diese Folge von Operationen und Entscheidungen nur eine bestimmte Zeitspanne beanspruchen dürfen, nämlich bis zum Eintreffen des nächstfolgenden Senderauslöseimpulses. Nach Ablauf der genannten bestimmten Zeitspanne für den kurzen Datenverarbeitungsprozess geht der Mikrorechner 120 wieder in eine Warteschleife über, bis er einen nächsten Auslöseimpuls feststellt.

Es ist dabei im Prinzip möglich, vor allem in der Zeit unmittelbar nach dem Erreichen der Frequenz- und Phasensynchronisation der Scheibe S, dass einzelne oder mehrere Impulse der Impulsreihe durch die beschriebene Regelschaltung gesperrt werden wegen kurzzeitiger Abweichungen der Antriebsregelung. Ein solches Fehlen von Impulsen muss vom Mikrorechner festgestellt werden, da sonst die Zuordnung von eingelesenen Entfernungsmesswerten zu bestimmten Raumwinkelsektoren RS und ihren zugehörigen Messkanälen MK fragwürdig oder unmöglich würde.

Die Arbeitsweise der Vorrichtung, soweit sie durch den Mikrorechner 120 gesteuert ist, wird nachfolgend auch anhand von Flussdiagrammen erläutert.

Die jeweilige Zeitdauer eines Verweilens des Mikrorechners 120 in einer Warteschleife wird von der Vorrichtung intern gemessen, beispielsweise durch Inkrementieren, d.h. Aufaddieren beziehungsweise durch Auffüllen eines Registers. Nach Eintreffen eines Senderauslöseimpulses wird die abgelaufene Wartezeit überprüft und dabei festgestellt, ob und wenn ja, wieviele Impulse allenfalls gefehlt haben.

Die eingelesenen Entfernungsmesswerte werden, wie noch beschrieben wird, vom Mikrorechner 120 den einzelnen Messkanälen MK zugeordnet und verarbeitet. Nach Erfüllung bestimmter Kriterien, beispielsweise bezüglich Zuverlässigkeit, können aus diesen Entfernungsmesswerten und zugehörigen abgelaufenen Zeitspannen die betreffenden Geschwindigkeitsmesswerte bestimmt und ausgegeben werden.

Bei der Errechnung eines Geschwindigkeitswertes ist dabei von grosser Bedeutung, dass die Entfernungsmesswerte eine genaue zeitliche Aequidistanz aufweisen. Weil dem Sender von der Senderauslöse- und Antriebsregelschaltung 123 (vergleiche Fig. 11a, b) eine Senderauslöseimpulsfolge, welche bekannte und konstante Zeitintervalle zwischen den einzelnen Impulsen aufweist zugeführt wird, trifft diese Bedingung der zeitlichen Aequidistanz zu.

Der Antrieb der Ablenkeinheit ist zwar phasenstarr mit der Senderauslöseimpulsfolge gekoppelt, kleine Fehler im Synchronlauf führen jedoch dazu, dass die Richtungen der Meßstrahlen beziehungsweise die sich ergebenden Raumwinkelsektoren RS lagemässig nicht ganz exakt wiederholt werden. Das Lichtfleckmuster auf dem vermessenen Objekt wird sich daher durch solche Fehler im Synchronlauf geringfügig räumlich verdrehen. Solange diese Verdrehungen im Verhältnis zu den tatsächlichen Abmessungen des Lichtfleckmusters geringfügig sind, sind auch ihre Auswirkungen praktisch bedeutungslos. Würden jedoch die Verdrehungen zu gross, so würden sie von der Senderauslöse- und Antriebsregelschaltung 123 erfasst, und es würde die Senderauslöseimpulsfolge vorübergehend gesperrt, bis eine ausreichende Synchronizität wiederhergestellt ist.

Eine in Gang gesetzte Messung wird nach Erfüllen beziehungsweise Nichterfüllen bestimmter Kriterien als erfolgreich beziehungsweise als erfolglos abgebrochen. Der Start-Stop-Ausgang des Mikrorechners 120 beziehungsweise die Leitung 125 wird dabei auf logisch ""0"" gebracht. Die Senderauslöseimpulsfolge wird somit abgebrochen, und der Motor M der Antriebseinheit 102 wird nicht mehr weiter mit Strom versorgt, so dass die Vorrichtung ihren Ruhezustand wieder erreicht.

Für ein Ausführungsbeispiel mit sechs Raumwinkelsektoren $RS_1$, $RS_2$, $RS_3$, $RS_4$, $RS_5$ und $RS_6$ und entsprechend sechs Messkanälen $MK_1$, $MK_2$, $MK_3$, $MK_4$, $MK_5$ und $MK_6$ werden nunmehr die zugehörigen Programme beziehungsweise Flussdiagramme erläutert.

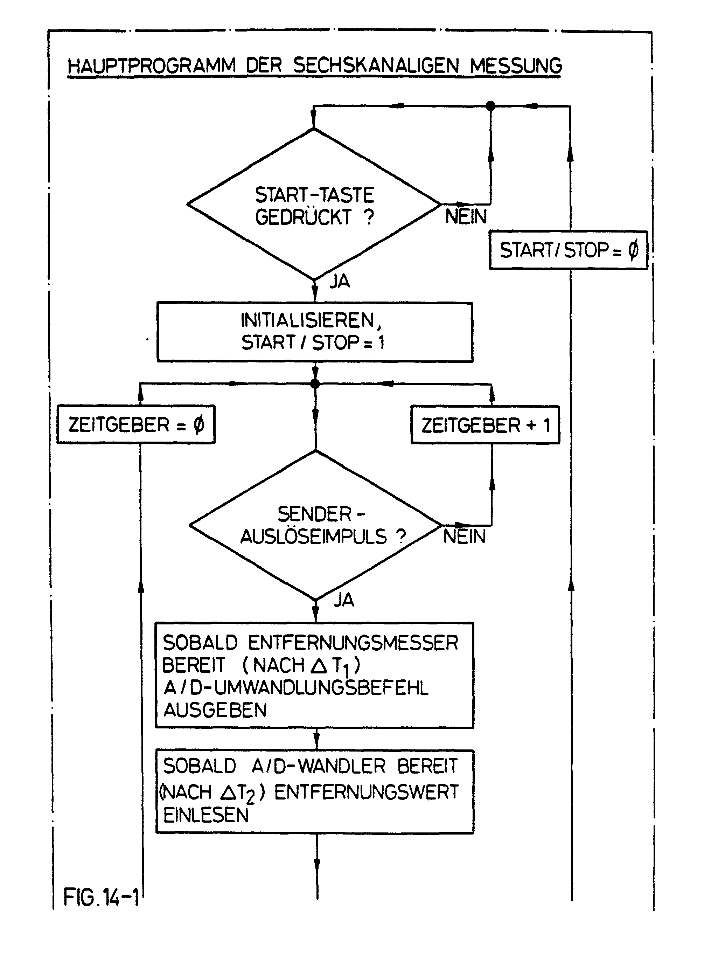

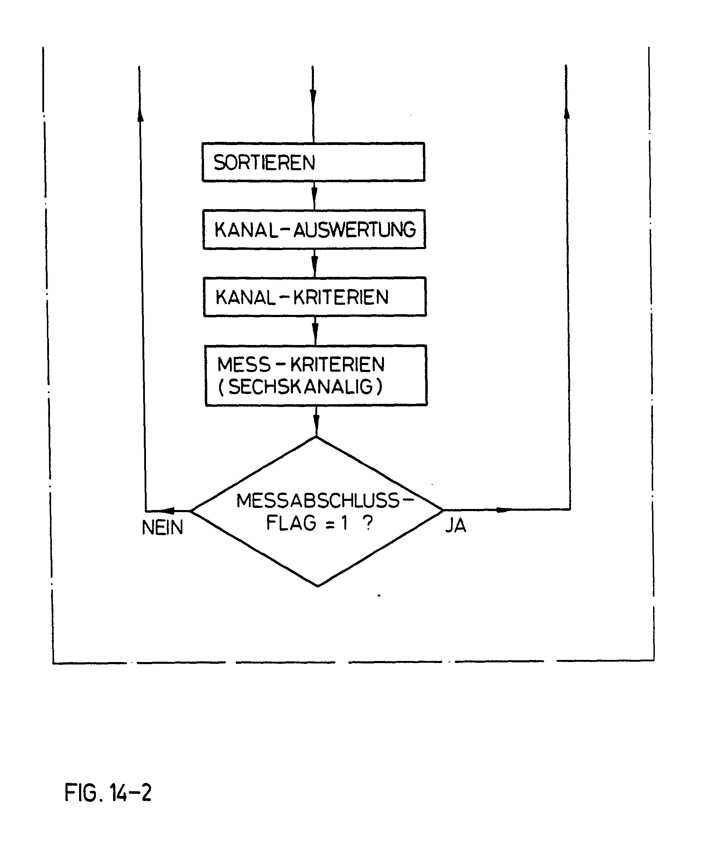

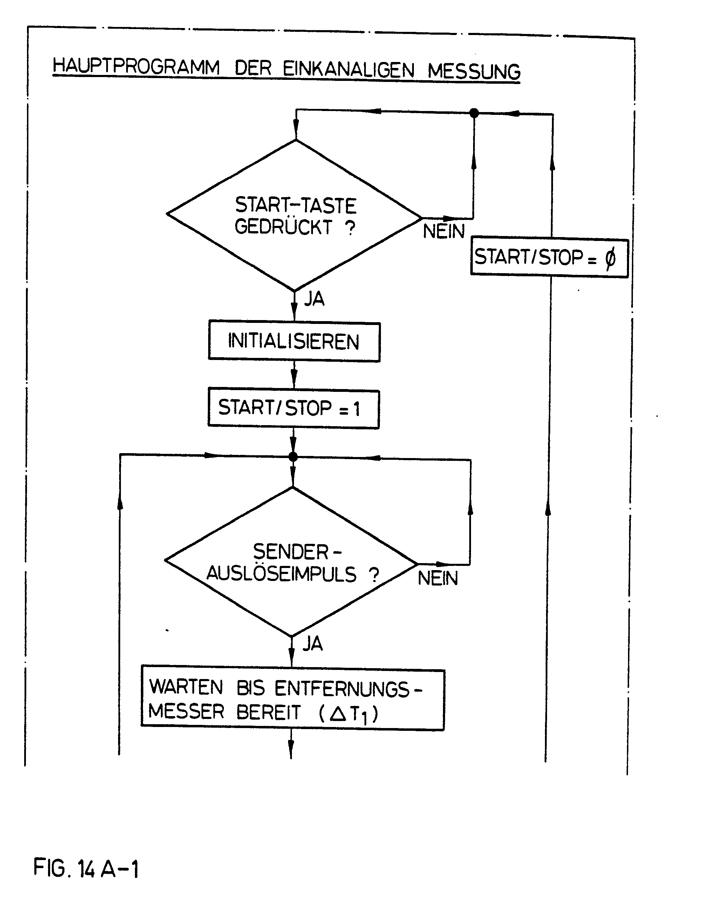

Die Fig. 14-1/14-2 zeigt ein Flussdiagramm des Hauptprogramms für eine sechskanalige Messung. Der darin dargestellte Ablauf ist wie folgt erläutert: Im Ruhezustand wird fortwährend der mit der Starttaste 129 verbundene Eingang des Mikrorechners 120 auf seinen Zustand abgefragt. Solange diese Starttaste 129 nicht gedrückt ist, verweilt die Vorrichtung in ihrem Ruhezustand.

Beim Drücken der Starttaste 129 ändert sich am genannten Eingang der logische Zustand, und diese Änderung wirkt als Signal für den Beginn einer Messung.

Als erstes wird hierauf eine sogenannte Initialisierung vorgenommen. Dabei werden alle für die Datenverarbeitung benötigten Speicherplätze im Schreib-Lesespeicher 136 gelöscht. Beispielsweise wird die von der vorangehenden Messung stammende Geschwindigkeitsanzeige gelöscht, und ein Zeitgeber wird zurückgestellt. Über die Start-Stopleitung 125 (siehe Fig. 11a) wird ein Signal logisch ""1"" an die Senderauslöse- und Antriebsregelschaltung 123 abgegeben, so dass - wie früher erwähnt - der Motor M der Ablenkeinheit 102 anläuft.

Als nächstes wird die Senderauslöseleitung 126 überprüft, beziehungsweise ein auftretendes Senderauslösesignal eingelesen. Nach jeder solchen Überprüfung wird ein im Mikrorechner 120 vorhandener Zeitgeber um eine Einheit inkrementiert. Sobald ein Senderauslöseimpuls festgestellt wird, gibt der Zählerstand dieses Zeitgebers Aufschluss über die verstrichene Wartezeit bis zum Eintreffen dieses Senderauslöseimpulses. Dieser Zählerstand wird, wie später erläutert wird, in einem Sortierprogramm benötigt.

Nach einer bestimmten Zeitspanne $\Delta T_1$ nach der Feststellung eines Senderauslöseimpulses wird dem Analog-Digital-Wandler 119A vom Mikrorechner 120 ein Umwandlungsbefehl erteilt. Nach Ablauf einer weiteren Zeitspanne $\Delta T_2$ wird vom Mikrorechner 120 der dann vom Analog-Digital-Wandler 119A abgegebene digitalisierte Entfernungswert eingelesen. Nun stellt sich die Aufgabe, den eingelesenen Entfernungswert dem richtigen Messkanal MK zuzuordnen. Diese Zuordnung erfolgt im Ablauf des weiter unten erläuterten Sortierprogramms.

Nachdem im Ablauf dieses Sortierprogramms die zum letzten Entfernungsmesswert gehörende Kanalnummer K bestimmt worden ist, kann dieser Entfernungsmesswert ausgewertet werden. Dies geschieht nach dem weiter unten erläuterten Kanalauswertungsprogramm. Dabei wird der zuletzt erhaltene Entfernungsmesswert in Beziehung gebracht zu den bereits im selben Kanal erhaltenen, mittlerweile gespeicherten Entfernungsmesswerten. Nach dieser Auswertung des Entfernungsmesswertes wird die bis dahin im jeweiligen Kanal eingetroffene und ausgewertete Information nach verschiedenen Kriterien geprüft. Dieser Programmteil wird mit "Kanalkriterien" bezeichnet, und er wird weiter unten erläutert.

Die Zusammenfassung der bis dahin über sämtliche Messkanäle erhaltenen Information und deren Beurteilung nach bestimmten weiteren Kriterien findet im Programmteil ""Messkriterien"" statt.

In diesem Programmteil wird entschieden, ob die Messung weitergeführt werden soll, oder ob sie abgeschlossen sei sowie ob sie erfolgreich oder ergebnislos abzuschliessen sei. Soll die Messung weitergeführt werden, wird ein ""Messabschlussflag = Ø"" gesetzt. Soll die Messung hingegen abgeschlossen werden, wird dieses "Messabschlussflag = 1" gesetzt.

Ergibt die Beurteilung, dass die Messung weiterzuführen sei, dann wird der erwähnte Zeitgeber gelöscht, und es wird ein neuer Messablauf eingeleitet. Nach Feststellung des nächsten Senderauslöseimpulses wird derselbe Weg, wie vorstehend beschrieben, nochmals beschritten. Ist hingegen die Messung abgebrochen, so wird auf die Start-Stop-Leitung 125 ein Signal logisch "0" ausgegeben, und die Vorrichtung wird dann in den Ruhezustand zurückversetzt.

Die Fig. 14A-1/14A-2 zeigt ein Flussdiagramm des Hauptprogramms für eine einkanalige Messung.

Die Fig. 15 zeigt ein Flussdiagramm des vorstehend erwähnten Sortierprogramms. Wie bereits erwähnt, erfüllt das Sortierprogramm die Aufgabe, den zuletzt eingelesenen Entfernungsmesswert dem richtigen Kanal

zuzuordnen. Im Normalfall gehören aufeinanderfolgende Entfernungsmesswerte zu zyklisch aufeinanderfolgenden Kanälen. Vor allem in der Anfangsphase einer Messung, das heisst dann, wenn die Drehzahlregelung der Ablenkeinheit noch nicht ganz ihren stabilen Zustand erreicht hat, kann es beispielsweise durch Überschwingen des Regelvorganges vorkommen, dass wegen momentan auftretenden, zu grossen Abweichungen eine oder mehrere Entfernungsmessungen ausgelassen werden zufolge Unterdruckung der betreffenden Senderauslöseimpulse. Auch ein allfälliges Missachten von Detektionsmarken DM auf der Detektionsscheibe DS durch die Lichtschranke LS würde zur Unterdrückung entsprechender Sender-Auslöseimpulse führen, so dass Lücken in der Sende-Auslöse-Impulsfolge auftreten könnten. Solche Lücken müssen unbedingt erkannt werden, um in der Kanalzuordnung der anfallenden Messwerte berücksichtigt zu werden.

Das Sortierprogramm, siehe Fig. 15, funktioniert wie folgt: Zuerst wird die Kanalnummer um eine Einheit erhöht und sichergestellt, dass auf die Nummer sechs die Nummer eins folgt. Hierauf wird der Inhalt des Zeitgebers eingelesen. Ist dieser Inhalt grösser als 6 x $\Delta T$, wobei $\Delta T$ dem normalen Zeitintervall der Sender-Auslöse-Impulsfolge, d.h. der Zeitspanne von Impuls zu Impuls entspricht, so handelt es sich höchstwahrscheinlich um den ersten Senderauslöseimpuls einer Messreihe. In diesem Fall werden die Messnummern $N_K$ aller Kanäle (K = 1 bis 6) auf Null (Ø) und die Kanalnummer K auf den Wert eins gesetzt. War hingegen der Zeitgeberhinhalt kleiner als 6 x $\Delta T$, wird geprüft, ob er grösser ist als $\Delta T$. Ist dies der Fall, so befand sich eine Lücke in der erfassten Sender-Auslöse-Impulsfolge, und es fehlt demnach ein Entfernungsmesswert im vorliegenden Kanal. In einem solchen Fall muss die Messreihe in diesem Kanal wieder neu angefangen werden, wobei auch jene vorher in diesem Kanal eingelesenen Messwerte, welche die nachfolgend beschriebene Zuverlässigkeitsprüfung noch nicht bestanden haben, gelöscht werden. Die Messnummer des überprüften Messkanals wird daher wieder auf Null (Ø) gesetzt. Anschliessend wird die Kanalnummer zyklisch erhöht, weil der vorliegende Messwert wegen der festgestellten Lücke einem nachfolgenden Kanal zugeordnet werden muss. Der Zeitgeberstand wird danach um den Betrag $\Delta T$ vermindert, und der Vergleich des Zeitgeberstandes oder -Inhaltes mit dem Wert $\Delta T$ wird wiederholt.

Handelt es sich bei einer festgestellten Lücke in einer Senderauslöseimpulsfolge um das Fehlen mehrerer aufeinanderfolgender Impulse, so wird auch jetzt, d.h. nach der Subtraktion von $\Delta T$ festgestellt werden, dass der Zeitgeberinhalt grösser ist als $\Delta T$. Ein weiteres Mal muss daher die Messnummer des vorliegenden Kanals auf den Wert Null (Ø) gesetzt werden und die Kanalnummer zugleich erhöht werden. Dieser Prozess wird automatisch weitergeführt, bis eine der tatsächlichen Grösse der Lücke in der Impulsfolge entsprechende Zahl von Kanälen durchlaufen worden ist. Ist dies erreicht, so ist der Zeitgeberinhalt kleiner als $\Delta T$, und daher ist die Nummer K des Kanals, welchem der letzte Entfernungsmesswert zugeordnet werden muss, erreicht worden. Diese Nummer K stellt das Ergebnis des Sortierprogramms dar, und mit dieser Nummer im betreffenden Speicherplatz findet anschliessend der Rücksprung in das Hauptprogramm statt.

Nachdem nun die Kanalnummer ermittelt worden ist, erfolgt die Kanalauswertung gemäss dem Flussdiagramm Fig. 16-1/16-2. Der zuletzt gemessene Entfernungswert wird mit den zuvor im gleichen Kanal gemessenen Entfernungswerten zu einem Gesamtergebnis verarbeitet. Als erstes wird geprüft, ob der gemessene Entfernungswert innerhalb eines zuvor angenommenen Messbereiches liegt. Dieser angenommene Messbereich umfasst jenen Distanzbereich, innerhalb welchem in einem gegebenen Fall sinnvolle Messungen erwartet werden können. Beispielsweise umfasst dieser angenommene Messbereich Entfernungswerte innerhalb 30 m bis 200 m.

Liegt eine gemessene Entfernung ausserhalb dieses angenommenen Bereiches, so wird auf deren weitere Auswertung verzichtet, und es erfolgt sofort ein Rücksprung in das Hauptprogramm. Liegt die gemessene Entfernung jedoch innerhalb des angenommenen Messbereiches, so wird zuerst die Messnummer des betreffenden Kanals $N_K$ um eine Einheit erhöht. Falls dadurch $N_K = 1$ wird, handelt es sich offensichtlich um die erste Messung innerhalb einer geschlossenen Gruppe von Messungen dieses Kanals, und es wird nach Speicherung dieses ersten Entfernungsmesswertes $E_{K_1}$ ein Rücksprung ins Hauptprogramm vollzogen.

Falls jedoch $N_K \neq 1$, so wird die Differenz zwischen $E_{K_N}$ und dem vorher im selben Kanal gemessenen Entfernungsmesswert $E_{K_{N-1}}$, also $\Delta E_{K_N}$ gebildet und gespeichert. Ist dies erfolgt, so kann der vorherige Wert $E_{K_{N-1}}$ gelöscht werden. Hingegen bleibt $E_{K_N}$ gespeichert für die entsprechende Bildung eines Differenzwertes nach dem Eintreffen des nächsten Entfernungsmesswertes.

Falls $N_K = 2$, ist jetzt nur ein Entfernungsdifferenzwert $\Delta E_{K2}$ vorhanden, welcher nun als Summe der bisher gebildeten Entfernungsdifferenzwerte $\sum \Delta E_{K_2}$ gespeichert wird. In diesem Falle wird nachher direkt der Rücksprung ins Hauptprogramm ausgeführt. Falls $N_K \neq 2$, so wird zuerst geprüft, ob der neugebildete Differenzwert $\Delta E_{K_N}$ nicht stärker vom Durchschnitt der zuvor im gleichen Kanal gemessenen Differenzwerte abweicht, als dies durch die Entfernungsmesstoleranz bedingt sein könnte.

Hierzu wird nun der Durchschnitt der zuvor gemessenen Differenzwerte

$$\overline{\Delta E_{K_{N-1}}} = \frac{\sum \Delta E_{K_{N-1}}}{N-2}$$

gebildet. Ist der Absolutwert der Differenz

$$\overline{\Delta E_{K_{N-1}}} - \Delta E_{K_N}$$

kleiner als die durch die Entfernungsmessung bedingte Toleranz, so bildet der neugebildete Differenzwert $\Delta E_{K_N}$ eine homogene Gruppe mit den vorher gebildeten Differenzwerten $\Delta E_{K_2}$ bis $\Delta E_{K_{N-1}}$, und er kann daher in diese Gruppe aufgenommen werden.

Es wird dann die neue Differenzwertsumme

$$\sum \Delta E_{K_N} = \sum \Delta E_{K_{N-1}} + \Delta E_{K_N}$$

gebildet, welche bei der Prüfung des nächsten Differenzwertes im gleichen Kanal massgebend für dessen Aufnahme in die homogene Gruppe ist. Anschliessend wird der Rücksprung ins Hauptprogramm vollzogen. Ist der Absolutwert der Differenz

$$\overline{\Delta E_{K_{N-1}}} - \Delta E_{K_N}$$

grösser als die durch die Entfernungsmessung bedingte Toleranz, so liegt eine zur Entfernungsmessung zusätzliche Fehlerquelle vor, wahrscheinlich durch das nicht lückenlose optische Verfolgen des zu vermessenden Objektes verursacht. Dabei hat der Meßstrahl, auf welchem der genannte Fehler beruht hat, bei der letzten Entfernungsmessung einen anderen Teil des zu vermessenden Objektes getroffen, als anlässlich der früheren Entfernungsmessungen über diesen Messkanal. Der neue Differenzmesswert $\Delta E_{K_N}$ ist in diesem Falle nicht homogen mit den vorher gebildeten Differenzwerten $\Delta E_{K_2}$ bis $\Delta E_{K_{N-1}}$ und kann deswegen nicht in die Gruppe dieser Differenzwerte aufgenommen werden.

Was nun mit dieser verbleibenden Gruppe von Differenzwerten $\Delta E_{K_2}$ bis $\Delta E_{K_{N-1}}$ geschieht, ist abhängig von der Anzahl von Differenzwerten in dieser Gruppe (N - 2). Im vorliegenden Beispiel wird eine Gruppengrösse von acht Elementen bei $N_K = 10$ für die Bildung eines Beitrages zu einem gespeicherten Teilresultat $\sum \Delta E_{K_M}$ als gerade noch zu klein angenommen.

Erst wenn $N_K$ grösser als 10 ist, wird in diesem Falle eine Gruppe von Differenzwerten als gross genug erachtet zur Bildung eines repräsentativen Beitrages für die Gesamtmessung. Bei kleineren Gruppen könnte nämlich der Zufall eine zu grosse Rolle spielen. Die tatsächliche Wahl dieser Gruppengrösse hängt jedoch von den jeweiligen Anforderungen an die Messgenauigkeit ab. Wesentlich ist dabei die Erkenntnis, dass nur grössere homogene Gruppen, basierend auf einer unmittelbar aufeinanderfolgenden Reihe von Messwerten zum Endresultat der Messung beitragen dürfen.

Abhängig von der Grösse der bis jetzt gespeicherten Gruppe wird nun die gespeicherte Summe $\sum \Delta E_{K_M}$, abhängig von der Grösse der Gruppe, um $\sum \Delta E_{K_{N-1}}$ erhöht, beziehungsweise nicht erhöht. Im ersten Fall wird der Betrag $M_K$, das heisst die Anzahl der für die gespeicherte Summe berücksichtigten Entfernungswerte um $N_{K-1}$ erhöht. In beiden Fällen wird vor dem Rücksprung ins Hauptprogramm die Messnummer des vorliegenden Kanals $N_K$ auf Null (∅) gesetzt, so dass weitere Messungen nur zur Bildung einer neuen Gruppe beitragen können.

Die Fig. 17 zeigt ein Flussdiagramm, nach welchem die gemäss bisheriger Beschreibung in einem Messkanal gewonnene Information nun nach verschiedenen Kriterien beurteilt wird, um zuverlässig bestimmten aus der Praxis sich ergebenden Anforderungen zu genügen. Ein erstes Kriterium stellt das Erreichen einer bestimmten Anzahl $M_K$ von Entfernungsdifferenzwerten dar, welche nach bestandener Homogenitätsprüfung zur gespeicherten Summe $\sum \Delta E_{K_M}$ beitragen konnten.

Im vorliegenden Beispiel wurde dafür die Anzahl von einhundert Messungen angenommen. Die Grösse dieser Anzahl hängt einerseits ab von der aus technischen Gründen erreichbaren Genauigkeit der einzelnen Entfernungsmesswerte und andererseits von der zulässigen Toleranz für den schliesslich zur Anzeige gelangenden Geschwindigkeitsmesswert.

Ist in einem praktischen Fall die geforderte Anzahl $M_K$ von mindestens innerhalb von Gruppen aufeinanderfolgenden homogenen Entfernungsmesswerten zustandegekommen, so kann darauf basierend ein auf den betreffenden Messkanal bezogenes Endresultat für einen zuverlässigen Geschwindigkeitsmesswert des vermessenen Objektes gebildet werden. Zur Bildung dieses zuverlässigen Geschwindigkeitsmesswertes aus den Messungen über einen bestimmten Messkanal wird die gespeicherte Summe

$$\sum \Delta E_{K_M}$$ dividiert durch die Anzahl $M_K - 1$ der bis dahin

ermittelten Entfernungsdifferenzwerte und durch die für die Bildung eines Entfernungsdifferenzmesswertes jeweils benötigte Zeitspanne $\Delta T$. Dadurch kommt für den betrachteten Messkanal K ein brauchbares Ergebnis zustande, was im Rechenprozess des Mikrorechners durch das Setzen eines "Ergebnisflag = 1" zum Ausdruck gebracht wird. Anschliessend erfolgt der Rücksprung ins Hauptprogramm.

Gemäss Flussdiagramm Fig. 17 erkennt man, dass im Falle, wo $M_K$ nicht grösser als einhundert ist, als weiterer Schritt geprüft wird, ob $N_K$, das ist die Anzahl Messungen, welche in der laufenden Gruppe des Kanals K bis zu diesem Zeitpunkt eingelesen worden sind, wenigstens grösser als 10 ist. Ist dies der Fall, so wird weiter geprüft, ob $M_K + N_K$ grösser als einhundert ist, und wenn dies zutrifft, so wird im folgenden Schritt der für den betrachteten Kanal K sich ergebende Geschwindigkeitsmesswert nach der Formel

$$V_K = \frac{\sum \Delta E_{K_M} + \sum \Delta E_{K_N}}{(M_K + N_K - 1) \cdot \Delta T}$$

gebildet und als Ergebnis dieses Kanals gespeichert und durch das Setzen des "Ergebnisflag Kanal K = 1" markiert. Anschliessend erfolgt der Rücksprung ins Hauptprogramm.

Ist hingegen im Ablauf gemäss Flussdiagramm Fig. 17 die Bedingung $N_K$ grösser als 10 nicht erfüllt, so besteht trotzdem noch eine Chance der Bildung eines zuverlässigen Geschwindigkeitsmesswertes $V_K$, wenn nämlich wenigstens die bisher gespeicherte Summe von Entfernungsdifferenzwerten $\sum \Delta E_{K_M}$ einen bestimmten Minimalwert werreicht hat. Die Grösse dieses Minimalwertes hängt ab von der Genauigkeit der Entfernungsmessung einerseits und von der zulässigen Toleranz für den zu ermittelnden Geschwindigkeitsmesswert andererseits.

Der Wert 20 m ist hier als ein praktisch sinnvoller Wert angenommen worden. Die Erfüllung dieser Bedingung bedeutet, dass das vermessene Objekt während der Summe der Zeitspannen, in welchen die zugehörigen Entfernungsdifferenzwerte $\Delta E_{K_M}$ zustande kamen, eine Wegstrecke von mindestens 20 m zurückgelegt hat.

Schnelle Fahrzeuge legen bis zur Erreichung einer gegebenen Anzahl von gespeicherten Entfernungsdifferenzwerten $M_K$ eine grössere Strecke zurück als langsame Fahrzeuge. Für die Toleranz des Endresultates muss die während der Messung zurückgelegte Strecke bezogen werden auf die Toleranz der Entfernungsmessung. Während nun für langsame Fahrzeuge eine absolute Toleranz der Geschwindigkeitsmessung erreicht wird beim Erreichen einer bestimmten Anzahl $M_K$ von homogenen Entfernungsdifferenzmessungen, wird für schnelle Fahrzeuge eine zur Geschwindigkeit relative Messtoleranz erreicht nach Erreichen einer bestimmten Grösse der gespeicherten Summe von homogenen Entfernungsdifferenzen $\sum \Delta E_{K_M}$. Falls die Bedingung $N_K$ grösser als zehn erfüllt ist, wird, zur Bestimmung der Wegstrecke, über welche zuverlässige (homogene) Entfernungsdifferenzwerte zustandekamen, $\sum \Delta E_{K_M} + \sum \Delta E_{K_N}$ herangezogen.

15

Wenn daher die Bedingung $M_K$ grösser als einhundert, oder die Bedingung $M_K + N_K$ grösser als einhundert nicht erfüllt wird, kann noch die Bedingung $\sum \Delta E_{K_M}$ grösser 20 m oder dann die Bedingung

$$\sum \Delta E_{K_M} + \sum \Delta E_{K_N}$$ grösser 20 m auf Erfüllung geprüft werden. Wird eine dieser Bedingungen erfüllt, so lässt sich immer noch ein zuverlässiger Geschwindigkeitswert $V_K$ für den betreffenden Kanal bestimmen.

Durch die eben beschriebenen Massnahmen wird erreicht, dass ein Geschwindigkeitsmesswert aus zahlreichen Messresultaten, die aus einem bestimmten Messkanal MK stammen, mit unter den praktischen Verhältnissen grösstmöglicher Zuverlässigkeit gebildet wird. So werden innerhalb des Geschehens in diesem Messkanal die möglichen Vorkehrungen getroffen, dass trotz der praktisch unvermeidlichen Sprünge des Meßstrahls nach unterschiedlichen Reflexionsstellen auf dem zu vermessenden Objekt keine Beeinträchtigung der Genauigkeit des Ergebnisses und damit der Zuverlässigkeit des schliesslich errechneten Geschwindigkeitsmesswertes auftreten.

Da ein gemessener Geschwindigkeitswert, wenn er eine unzulässige Überschreitung einer vorgeschriebenen Höchstgeschwindigkeit anzeigt, Straffolgen für den betreffenden Fahrer nach sich ziehen kann und diese Straffolgen Gegenstand eines gerichtlichen Verfahrens werden können, reicht in vielen Fällen die blosse Zuverlässigkeit allein nicht aus. Es muss nämlich ein höherer Grad an rechtlicher Verbindlichkeit des zur Anzeige gelangenden, am vermessenen Objekt, beziehungsweise Fahrzeug festgestellten Geschwindigkeitswertes angestrebt werden.

Durch weitere Massnahmen wird diese höhere Verbindlichkeit erzielt. Schon bisher hatte man bei der Anwendung beispielsweise von Doppler-Radargeschwindigkeitsmessgeräten im Interesse einer Steigerung dieser Verbindlichkeit darauf verzichtet, alle diejenigen Messresultate anzuzeigen, welche berechtigte Zweifel über ihre Gültigkeit aufkommen liessen. Das führte jedoch dazu, dass ein oft unerwünscht grosser Prozentsatz von Verkehrssündern wegen möglicher Anfechtbarkeit der betreffenden Messung nicht zur Verzeigung gebracht wurde.

Wie eingangs erwähnt, soll mit der Erfindung auch dieser Nachteil behoben und Zweifelsfälle nur dann ausgeschieden werden, wenn diese wirklich begründet sind.

Der Sinn der früher beschriebenen mehrkanaligen Messung, beispielsweise mittels sechs Messkanälen, welche gesamthaft das zu vermessende Objekt, beziehungsweise Fahrzeug erfassen, liegt nun eben darin, das Messresultat aus einem Kanal durch mindestens ein weiteres gleiches Messresultat aus einem weiteren, das heißt anderen Messkanal, sich bestätigen zu lassen.

Mit der zuvor beschriebenen, mehrkanaligen Messvorrichtung, bei welcher zyklisch in einer Reihe von Messkanälen Meßstrahlen zum zu vermessenden Objekt ausgesandt und Reflexionen an diesem in den verschiedenen Messkanälen ausgewertet werden, gelingt es einerseits weitere Fehlerquellen, welche die Verbindlichkeit eines angezeigten Messresultates in Frage stellen könnten, zu eliminieren und andererseits Messungen aus mindestens einem weiteren Messkanal als Bestätigung oder gar mehrfachen Bestätigungen der Messungen aus dem ersten Kanal zu benützen.

Als solche Fehlerquellen müssen die Möglichkeiten betrachtet werden, dass Meßstrahlen, welche zwar zum bestimmten beweglichen Objekt gerichtet werden, zufolge mindestens zeitweiser Richtungsschwankungen, beziehungsweise ungenauer optischer Ausrichtung der Vorrichtung auf dieses Objekt, an diesem vorbeilaufen und gegebenenfalls an einem anderen beweglichen Objekt oder Fahrzeug reflektiert werden. Ein solches anderes Fahrzeug könnte beispielsweise ein Fahrzeug sein, welches das gewünschte Fahrzeug eben überholt und daher eine höhere Geschwindigkeit aufweist als dieses.

Würden nun unerkannterweise Messresultate von einem oder gar mehreren anderen Kanälen ein solches Fahrzeug treffen, so könnte, ohne besondere Massnahmen, der die Messung ausführende Beamte unbeabsichtigt falsche Geschwindigkeitsmesswerte dem von ihm vermeintlich verfolgten Fahrzeug, beziehungsweise Fahrer, zuordnen, was natürlich nicht geschehen darf.

Bei der nunmehr anhand des Flussdiagramms gemäss Fig. 18 zu beschreibenden, beispielsweise sechskanaligen, Messung, geht man wie folgt vor:

Zuerst wird geprüft, ob aus ausreichend vielen, beispielsweise mindestens zwei verschiedenen Messkanälen, zuverlässige Geschwindigkeitswerte zustandegekommen sind. Wenn diese Bedingung nicht erfüllt ist, wird entschieden, ob die betreffende Messung weitergeführt werden soll, oder ob sie als ergebnislos abzubrechen ist.

Zuerst wird daher geprüft, ob und wenn ja, wieviele ""Kanalergebnisflags = 1" gesetzt worden sind, mit anderen Worten, in wievielen Kanälen ein zuverlässiger Messwert zustandegekommen ist.

Sind weniger als beispielsweise zwei solche "Kanalergebnisflags = 1" gesetzt worden, so wird weiter geprüft, wie lange die betreffende Messung bereits im Gange ist. Als eine annehmbare Grenze hiefür wird beispielsweise eine Zeitspanne von zwei Sekunden angenommen. Je nach Anwendungsfall kann aber auch eine andere Zeitspanne sinnvoll sein.

Wurde nun im vorliegenden Fall bereits während zwei Sekunden gemessen, ohne dass ein zuverlässiger Messwert zustandegekommen ist, dann wird die laufende Messung als ergebnislos abgebrochen. Dieser Tatbestand wird dem die Vorrichtung Bedienenden durch eine besondere Anzeige, beispielsweise ein Signallicht oder durch Ausgabe eines fiktiven Geschwindigkeitswertes Null, angezeigt. Vor dem Rücksprung ins Hauptprogramm wird ein "Messabschlussflag = 1" gesetzt.

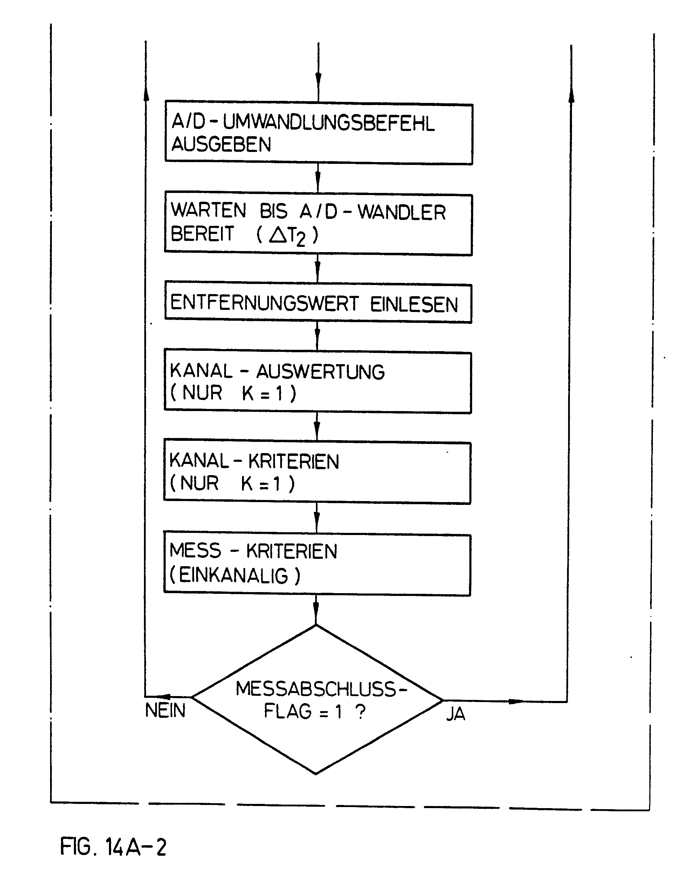

Das früher beschriebene Hauptprogramm, siehe Flussdiagramm Fig. 14, prüft dieses "Messabschlussflag" und bestimmt aufgrund dessen Wertes den weiteren Funktionsablauf.

Wurde die angenommene Messzeitspanne von zwei Sekunden noch nicht überschritten, so wird das ""Messabschlussflag" vor dem Rücksprung ins Hauptprogramm (Fig. 14) auf Null (Ø) gesetzt.

Waren jedoch zwei oder mehr ""Kanalergebnisflags = 1" gesetzt, so werden nun die entsprechenden Kanalergebnisse miteinander verglichen. Werden dabei Abweichungen festgestellt, welche nicht durch die normalen Messtoleranzen erklärbar sind, so wird angenommen, dass mindestens zwei bewegte Objekte, also Fahrzeuge, während des Messablaufes von der Vorrichtung, beziehungsweise ihren Meßstrahlen, mindestens zeitweise erfasst worden sind.

Die unterschiedlichen Fahrzeuge wurden zwar pro Kanal zuverlässig gemessen, eine eindeutige Zuordnung der betreffenden Messresultate zu einem bestimmten anvisierten Fahrzeug ist jedoch nicht möglich oder gewährleistet.

Aus Gründen der dann unzulänglichen Verbindlichkeit des Messresultates werden in diesem Fall daher alle diese Messresultate annulliert, beziehungsweise gelöscht. Auch in diesem Falle wird dem Bedienenden der Vorrichtung eine erfolglose Messung signalisiert. Auch jetzt wird vor dem Rücksprung ins Hauptprogramm (Fig. 14) das "Messabschlussflag = 1" gesetzt.

Sind hingegen die beim Vergleich der Messresultate aus verschiedenen Kanälen festgestellten Abweichungen so klein, dass sie auf die an sich bekannte Messtoleranz zurückgeführt werden können, so handelt es sich um eine verbindliche Messung eines einzigen Fahrzeuges. Die Zuordnung eines verbindlichen Geschwindigkeitsmesswertes zu dem in der Visiereinrichtung der Vorrichtung erkennbaren Fahrzeug ist somit einwandfrei gewährleistet.

Anschliessend wird nun aus den diese Prüfung bestehenden Kanälen stammenden Messwerten der Durchschnittswert gebildet und dieser in der Anzeigeeinrichtung als verbindlicher Geschwindigkeitsmesswert des vermessenen Fahrzeuges angezeigt.

Das "Messabschlussflag" wird gleich 1 gesetzt und der Rücksprung ins Hauptprogramm gemäss Fig. 14 vollzogen.

Wie bereits früher erwähnt, ist schon mit einer Erfassung des bewegten Objektes über nur einen Messkanal eine gegenüber dem Stand der Technik beträchtlich höhere Zuverlässigkeit der Geschwindigkeitsmessung zu erreichen. In bestimmten Anwendungsfällen, beispielsweise bei Messung über Distanzen bis etwa 100 m, ist es durchaus möglich, bei sorgfältiger Handhabung der Vorrichtung das Problem der richtigen Zuordnung von Messwert zu Fahrzeug zu beherrschen. Dies ist nämlich dann der Fall, wenn dank hochwertiger Optik ein im Verhältnis zur Fahrzeugsilhouette kleiner Lichtfleck auf dem zu vermessenden Fahrzeug abgebildet wird und wenn auch die Visiereinrichtung eine gute Beobachtung des zu vermessenden und optisch zu verfolgenden Fahrzeugs erlaubt.

Eine solche einkanalige Vorrichtung erfordert einen bescheideneren technischen Aufwand und kann daher für gewisse Fälle durchaus vorteilhaft sein.

Die Fig. 19 zeigt ein für den Fall der einkanaligen Messung aufgestelltes Flussdiagramm für die anzulegenden Messkriterien.

Zuerst wird geprüft, ob das "Ergebnisflag" des nun einzigen Messkanals bereits gesetzt ist. Trifft dies zu, so wird der ermittelte Geschwindigkeitswert zur Anzeige gebracht und das "Messabschlussflag = 1" gesetzt. Daraufhin erfolgt der Rücksprung ins Hauptprogramm (siehe Fig. 14a).

Wurde hingegen das "Ergebnisflag" noch nicht = 1 gesetzt, so wird die bis zu diesem Zeitunkt verstrichene Messzeit geprüft. Hat die verstrichene Messzeit ein Limite von beispielsweise 2 Sek. überschritten, so wird die Messung als erfolglos signalisiert, zum Beispiel wird der fiktive Wert Null (Ø) ausgegeben. Vor dem Rücksprung ins Hauptprogramm (siehe Fig. 14a) wird das ""Messabschlussflag = 1" gesetzt. Wurde hingegen die genannte Limite bezüglich der Messzeit noch nicht erreicht, so wird die Messung weitergeführt. Hierzu wird vor dem Rücksprung ins Hauptprogramm das "Messabschlussflag = 0 (Ø)" gesetzt.

## Patentansprüche

1. Verfahren zur Messung der Geschwindigkeit eines bewegten Objekts mittels von einem Sender (101, 102, 112, L) erzeugter gepulster optischer Strahlung, bei welchem ein durch eine Vielzahl von optischen Impulsen gebildeter Meßstrahl (1' bzw. 2' bzw. 3') auf das zu vermessende Objekt gerichtet und die von diesem reflektierten Impulse in einem Empfänger (104, 105, 118-120) empfangen und ausgewertet werden, wobei aus den Laufzeiten der Impulse vom Sender zum Objekt und von diesem zurück zum Empfänger Entfernungswerte und aus diesen Entfernungsdifferenzen gebildet und durch Division von Entfernungsdifferenzen durch die zugehörigen Zeitintervalle zwischen den Entfernungsmessungen Geschwindigkeitswerte des Objekts bestimmt werden, dadurch gekennzeichnet, daß mittels des Senders auf das zu vermessende Objekt (F) innerhalb einer Zeitspanne im wesentlichen konstanter Geschwindigkeit des Objekts mindestens ein weiterer, vom genannten Meßstrahl räumlich getrennter Meßstrahl gerichtet und die Laufzeiten der Impulse für jeden Meßstrahl getrennt ausgewertet und dadurch für jeden der räumlich getrennten Meßstrahlen Entfernungswerte, Entfernungsdifferenzen und Geschwindigkeitswerte des Objekts gebildet werden, dass für jeden der räumlich getrennten Messstrahlen die Bestimmung der Geschwindigkeitswerte jeweils anhand von Serien von aus mehreren unmittelbar aufeinanderfolgenden Entfernungswerten gewonnenen Entfernungsdifferenzen erfolgt, dass nur solche Serien von Entfernungsdifferenzen berücksichtigt werden, bei denen alle Werte innerhalb eines festgelegten Toleranzbereichs übereinstimmen, wobei jeder Geschwindigkeitswert durch Division der Summe mindestens einer derartigen Serie von Entfernungsdifferenzen durch die Summe der zugehörigen Zeitintervalle errechnet wird, und dass das Ergebnis dieser Messung nur dann als zuverlässig akzeptiert wird, wenn von wenigstens zwei räumlich getrennten Meßstrahlen stammende Geschwindigkeitswerte vorliegen und wenn diese innerhalb eines festgelegten Toleranzbereichs übereinstimmen.

2. Verfahren nach Anspruch 1, dadurch gekennzeichnet, daß mehr als zwei, vorzugsweise vier bis sechs, Meßstrahlen (1', 2', 3') auf das zu vermessende Objekt (F) gerichtet werden.

3. Verfahren nach Anspruch 2, dadurch gekennzeichnet, daß die Meßstrahlen (1', 2', 3') von einer einzigen Quelle (L) ausgesandt werden und die verschiedenen räumlich getrennten Lagen sequentiell einnehmen.

4. Verfahren nach Anspruch 3, dadurch gekennzeichnet, daß die Messung automatisch abgebrochen wird, wenn nach einer bestimmten Messdauer nicht mindestens zwei von aus verschiedenen räumlich getrennten Meßstrahlen (1', 2', 3') stammende Geschwindigkeitswerte vorliegen und innerhalb des festgelegten Toleranzbereichs übereinstimmen.

5. Verfahren nach einem der Ansprüche 2 bis 4, dadurch gekennzeichnet, daß aus den innerhalb des festgelegten Toleranzbereichs übereinstimmenden Geschwindigkeitswerten der verschiedenen Meßstrahlen (1', 2', 3') ein Durchschnittswert gebildet wird, welcher das verbindliche Ergebnis der Geschwindigkeitsmessung darstellt.

6. Vorrichtung zur Durchführung des Verfahrens nach Anspruch 1, mit einer gepulsten Lichtquelle (L), einer Sendeoptik (103), einer Empfangsoptik (104, 105), einem Empfänger (118) und mit einer elektronischen Auswerteinheit (120) zur Bildung von Entfernungswerten des angepeilten Objekts (F) aus den Laufzeiten der ausgesandten und empfangenen optischen Impulse und zur Bildung von Entfernungsdifferenzen aus den Entfernungswerten sowie zur Berechnung von Geschwindigkeitswerten des angemessenen Objekts aus den Entfernungsdifferenzen, dadurch gekennzeichnet, daß zwischen der gepulsten Lichtquelle (L) und der Sendeoptik (103) eine zur optischen Achse (a) schräg liegende und um diese rotierbare, durchsichtige Scheibe (S) angeordnet ist, bei deren Rotation eine wiederholte Ablenkung der von der Lichtquelle ausgesandten Meßstrahlen in verschiedene Raumwinkelsektoren (RS) innerhalb einer Zeit, in der sich die Geschwindigkeit des Objekts im wesentlichen nicht ändert, erfolgt, und dass die elektronische Auswerteinheit (120) einen Speicher (136) zur vorübergehenden Speicherung einer Mehrzahl von Entfernungsdifferenzen jeweils für jeden Raumwinkelsektor, Mittel zum Vergleich jeder neu gewonnenen Entfernungsdifferenz eines Raumwinkelsektors mit einem gespeicherten aus den zuvor gewonnenen Entfernungsdifferenzen abgeleiteten Referenzwert zwecks Auffinden einer Serie von mehreren unmittelbar aufeinanderfolgenden und innerhalb eines festgelegten Toleranzbereichs übereinstimmenden Entfernungsdifferenzwerten des betreffenden Raumwinkelsektors, sowie Mittel zur Speicherung der in verschiedenen Raumwinkelsektoren gewonnenen Geschwindigkeitswerte und zu deren gegenseitigem Vergleich enthält.

7. Vorrichtung nach Anspruch 6, gekennzeichnet durch eine Senderauslöse- und Antriebsregelschaltung (123) für die Synchronisation der Rotation der Scheibe (S) mit einer Senderauslöseimpulsfolge, deren Frequenz in einem definierten Verhältnis zur Drehzahl der Scheibe steht.

8. Vorrichtung nach Anspruch 7, dadurch gekennzeichnet, daß die Senderauslöse und Antriebsregelschaltung (123) einen frequenzstabilen Generator (139) mit nachfolgendem Frequenzteiler (145) und Frequenzzähler (148) zur Erzeugung von ein Zeitraster bildenden Impulsfolgen aufweist, und daß ein an einem ersten Eingang (150) eine Impulsfolge von einem ersten Ausgang ($Q_1$) des Frequenzzählers (148) erhaltender Phasenkomparator (151) für den Vergleich von Impulsen einer die Rotation der Scheibe (S) überwachenden Lichtschranke (LS) mit Impulsen des Zeitrasters vorgesehen und der Regelausgang (153) des Phasenkomparators (151) über einen Leistungsverstärker (156) mit dem Antrieb (M) der Scheibe verbunden ist, wobei der Kontrollausgang (164) des Phasenkomparators und weitere Ausgänge ($Q_0$, $Q_3$) des Frequenzzählers mit Eingängen (161, 162; 149, 159) von zwei Flipflop (158, 160) verbunden sind, deren Ausgänge (165, 168) über ein UND-Tor (167) mit dem ersten Eingang (171) dieses weiteren UND-Tores (172) verbunden sind, wobei dem zweiten Eingang (173) dieses weiteren UND-Tores (172) aus dem Frequenzzähler eine Senderauslöseimpulsfolge zugeführt ist und das weitere UND-Tor (172) zufolge der logischen Verknüpfung der zugeführten Signale nur bei Synchronisation der Rotation der Scheibe mit dem Zeitraster durchlässig geschaltet und der Ausgang (126A) der Senderauslöse- und Antriebsregelschaltung mit der Lichtquelle (L) verbunden ist.

### Claims

1. Method of measuring the speed of a moved object by means of pulsed optical radiation generated by a transmitter (101, 102, 103, 112, L), wherein a measuring beam (1', 2', 3' respectively) formed by a plurality of optical pulses is directed to the object to be measured the pulses reflected from the latter are received in a receiver (104, 105, 118-120) and evaluated, wherein distance values are formed from the transit times of the pulses from the sender to the object and from the latter back to the receiver, wherein differences in distance are formed from the distance values, and wherein speed values of the object are determined by division of the differences in distance by the associated time intervals between the distance measurements, characterised in that at least one further measurement beam spatially separated from the said measurement beam is directed onto the object to be measured by means of the transmitter within a time span of substantially constant speed of the object, and the transit times of the pulses for each measurement beam are separately evaluated and thereby distance values, differences in distance and speed values for the object are formed for each of the spatially separate measurement beams; in that for each of the spatially separate measurement beams the determination of the speed values takes place in each case with reference to series of differences in distance obtained from a plurality of directly sequential distance values; in that only such series of differences in distance are considered in which all values agree within a specified tolerance range; with each speed value being calculated by division of the sum of at least one such series of differences in distance by the sum of the associated time intervals; and in that the result of this measurement is only then accepted as being reliable when the speed values originating from at least two spatially separated measurement beams are present and when these agree within a specified tolerance range.

2. Method in accordance with claim 1, characterised in that more than two and preferably four to six measurement beams (1', 2', 3') are directed onto the object (F) to be measured.

3. Method in accordance with claim 2, characterised in that the measurement beams (1', 2', 3') are transmitted from a single source (L) and sequentially adopt the various spatially separated positions.

4. Method in accordance with claim 3, characterised in that the measurement is automatically interrupted when, after a specific measurement period, there are not at least two speed values present which originate from different spatially separated measurement beams (1', 2', 3') and correspond within the specified tolerance range.

5. Method in accordance with one of the claims 2 to 4, characterised in that an average value is formed from the speed values for the various measurement beams (1', 2', 3') which agree within the specified tolerance range and represents the binding result of the speed measurement.

6. Apparatus for carrying out the method of claim 1 comprising a pulsed light source (L), a transmitting optical system (103), a receiving optical system (104, 105),a receiver (118) and an electronic processing unit (120) for forming distance values for the targeted object (F) from the transit times of the transmitted and received optical pulses, for forming differences of distance from the distance values, and also for computing speed values of the targeted object from the differences in distance, characterised in that a transparent disk (S) which lies oblique to an optical axis (a) and is rotatable about this axis is arranged between the pulsed light source (L) and the optical transmitting system (103), with a repeated deflection of the measurement beams transmitted from the light source into different solid angle sectors (RS) taking place on rotation of the disk (S) within a period in which the speed of the object does not substantially change; and in that the electronic processing unit (120) contains a memory (136) for the temporary storage of a plurality of differences in distance for each solid angle sector, means for comparing each newly obtained difference in distance for a solid angle sector with a stored reference value derived from the previously obtained differences in distance for the purpose of finding a series of a plurality of directly sequential distance difference values for the respective solid angle sector which agree within a specified tolerance range, and also means for storing the speed values obtained in the different solid angle sectors and for their mutual comparison.

7. Apparatus in accordance with claim 6, characterised by a transmitter trigger and drive regulating circuit (123) for the synchronisation of the rotation of the disk (S) with a transmitter trigger pulse sequence the frequency of which stands in a defined ratio to the speed of rotation of the disk.

8. Apparatus in accordance with claim 7, characterised in that the transmitter trigger and drive regulating circuit (123) has a frequency stable generator (139) with subsequent frequency divider (145) and frequency counter (148) for the generation of pulse sequences forming a time raster; in that a phase comparator (151) which receives a pulse sequence from a first output ($Q_1$) of the frequency counter (148) at a first input (150) is provided for comparing the pulses of a light barrier (LS) which monitors the rotation of the disk (S) with pulses of the time raster; and in that the control output (153) of the phase comparator (151) is connected via a power amplifier (156) with the drive (M) for the disk, wherein the control output (164) of the phase comparator and further outputs ($Q_0$, $Q_3$) of the frequency counter is connected with inputs (161, 162; 149, 159) of two flip-flops (158, 160) the outputs (165, 168) of which are connected via an AND-gate (167) with the first input (171) of a further AND-gate (172), wherein a transmitter trigger pulse sequence is supplied to the second input (173) of this further AND-gate (172) from the frequency counter, wherein the further AND-gate (172) is only switched to transmit as a consequence of the logical linking of the supplied signals on synchronisation of the rotation of the disk with the time raster, and wherein the output (126A) of the transmitter trigger and drive regulating circuit is connected to the light source (L).

## Revendications

1. Procédé pour mesurer la vitesse d'un objet mobile au moyen d'un rayonnement optique pulsé engendré par un émetteur (101, 102, 103, 112,L), dans lequel un faisceau de mesure (1' ou 2' ou 3') formé par une multiplicité d'impulsions optiques est dirigé sur l'objet à mesurer et les impulsions réfléchies par celui-ci sont reçues et évaluées dans un récepteur (104, 105, 118-120), tandis qu'à partir des temps de parcours des impulsions de l'émetteur à l'objet et de celui-ci en retour au récepteur, des valeurs d'éloignement et à partir de celles-ci des différences d'éloignement sont formées et grâce à une division des différences d'éloignement par les intervalles de temps correspondants entre les mesures d'éloignement, des valeurs de vitesse de l'objet sont déterminées, caractérisé en ce qu'à l'aide de l'émetteur, on dirige sur l'objet à mesurer (F), au cours d'un intervalle de temps à vitesse essentiellement constante de l'objet, au moins un autre faisceau de mesure distinct dans l'espace du faisceau de mesure précité et les temps de parcours des impulsions sont évalués séparément pour chaque faisceau de mesure et ainsi pour chacun des faisceaux de mesure distincts dans l'espace, les valeurs d'éloignement, les différences d'éloignement et les valeurs de vitesse de l'objet sont formées, en ce que pour chacun des faisceaux de mesure distincts dans l'espace, la détermination des valeurs de vitesse a lieu à partir de séries de différences d'éloignement obtenues à partir de plusieurs valeurs d'éloignement se succédant directement, en ce que l'on ne prend en considération que les séries de différences d'éloignement dans lesquelles toutes les valeurs correspondent à l'intérieur d'une plage de tolérance fixée, chaque valeur de vitesse étant calculée par division de la somme d'au moins une telle série de différences d'éloignement par la somme des intervalles de temps correspondants, et en ce que le résultat de cette mesure n'est accepté comme fiable que quand il existe des valeurs de vitesse provenant d'au moins deux faisceaux de mesure distincts dans l'espace et quand celles-ci correspondent à l'intérieur d'une plage de tolérance fixée.

2. Procédé suivant la revendication 1, caractérisé en ce que plus de deux, de préférence quatre à six faisceaux de mesure (1', 2', 3') sont dirigés sur l'objet à mesurer (F).

3. Procédé suivant la revendication 2, caractérisé en ce que les faisceaux de mesure (1', 2', 3') sont émis à partir d'une unique source (L) et prennent séquentiellement les différentes positions distinctes dans l'espace.

4. Procédé suivant la revendication 3, caractérisé en ce que la mesure est interrompue automatiquement quand, après une durée de mesure déterminée, il n'existe pas de valeurs de vitesse provenant d'au moins deux faisceaux de mesure (1', 2', 3') différents distincts dans l'espace et qui correspondent à l'intérieur de la plage de tolérance fixée.

5. Procédé suivant l'une des revendications 2 à 4, caractérisé en ce qu'à partir des valeurs de vitesse correspondantes dans la plage de tolérance fixée des différents faisceaux de mesure (1', 2', 3') une valeur moyenne est formée, qui constitue le résultat valable de la mesure de vitesse.

6. Dispositif pour la mise en oeuvre du procédé suivant la revendication 1, avec une source de lumière pulsée (L), une optique d'émission (103), une optique de réception (104, 105), un récepteur (118) et avec une unité d'évaluation électronique (120) pour la formation des valeurs d'éloignement de l'objet visé (F) à partir des temps de parcours des impulsions optiques émises et reçues et pour la formation de différences d'éloignement à partir des valeurs d'éloignement, ainsi que pour le calcul de valeurs de vitesse de l'objet visé à partir des valeurs d'éloignement, caractérisé en ce qu'entre la source de lumière pulsée (L) et l'optique d'émission (103) est agencé un disque (S) transparent rotatif, disposé en oblique par rapport à l'axe optique (a), avec la rotation duquel une déviation répétée des faisceaux de mesure émis à partir de la source de lumière a lieu dans divers secteurs d'angle solide (RS), au cours d'une période où la vitesse de l'objet ne se modifie pratiquement pas, et en ce que l'unité d'évaluation électronique (120) comporte une mémoire (136) pour la mémorisation temporaire d'une multiplicité de différences d'éloignement pour chaque secteur d'angle solide, des moyens pour la comparaison de chaque nouvelle différence d'éloignement obtenue d'un secteur d'angle solide avec une valeur de référence mémorisée, dérivée des différences d'éloignement obtenues précédemment, dans le but de découvrir une série de plusieurs valeurs de différence d'éloignement du secteur d'angle solide concerné, se succédant directement et correspondant dans une plage de tolérance fixée, ainsi que des moyens pour la mémorisation des valeurs de vitesse obtenues dans les divers secteurs d'angle solide et leur comparaison mutuelle.

7. Dispositif suivant la revendication 6, caractérisé par un montage de déclenchement d'émetteur et de réglage d'entraînement (123) pour la synchronisation de la rotation du disque (S) avec une séquence d'impulsions de déclenchement d'émetteur, dont la fréquence se trouve en un rapport défini avec la vitesse de rotation du disque.

8. Dispositif suivant la revendication 7, caractérisé en ce que le montage de déclenchement d'émetteur et de réglage d'entraînement (123) présente un générateur stabilisé en fréquence (139) avec à la suite un diviseur de fréquence (145) et un compteur de fréquence (148) pour la production de séquences d'impulsions formant une trame, et en ce qu'un comparateur de phases (151) recevant à une première entrée (150) une séquence d'impulsions provenant d'une première sortie ($Q_1$) du compteur de fréquence (148) est prévu pour la comparaison d'impulsions d'une barrière lumineuse (LS) surveillant la rotation du disque (S) avec des impulsions de la trame, et la sortie de réglage (153) du comparateur de phases (151) est reliée par l'intermédiaire d'un amplificateur de puissance (156) à l'entraînement (M) du disque, la sortie de contrôle (164) du comparateur de phases et d'autres sorties ($Q_0$, $Q_3$) du compteur de fréquence étant reliées à des entrées (161, 162; 149, 159) de deux bascules (158, 160), dont les sorties (165, 168) sont reliées par l'intermédiaire d'une porte ET (167) à la première entrée (171) d'une autre porte ET (172), la seconde entrée (173) de cette autre porte ET (172) recevant à partir du compteur de fréquence, une séquence d'impulsions de déclenchement d'émetteur et l'autre porte ET (172), à cause de la combinaison logique des signaux appliqués, n'étant rendue conductrice que lors de la synchronisation de la rotation du disque avec la trame de temps, et la sortie (126A) du montage de déclenchement d'émetteur et de réglage d'entraînement étant reliée à la source de lumière (L).

RS₂

FIG. 1a

RS₃

RS₁

RS₄

RS₇        RS₆

FIG. 1b

RS₈

RS₅

RS₉        RS₁₀

RS₁₃        RS₁₂

FIG. 1c

RS₁₁

RS₁₄

RS₁₅        RS₁₆

FIG. 1

FIG. 2

FIG. 3

FIG. 4

FIG. 5

FIG. 6

FIG. 7

FIG. 8

FIG. 9

FIG. 10

15

0 082 243

FIG. 11 A

FIG. 11 B

FIG. 12

123

FIG. 13

# HAUPTPROGRAMM DER SECHSKANALIGEN MESSUNG

```
                    START-TASTE
                    GEDRÜCKT ?          NEIN
                         |
                         | JA              START / STOP = ∅
                         |
                    INITIALISIEREN,
                    START / STOP = 1


    ZEITGEBER = ∅                         ZEITGEBER + 1


                    SENDER -
                    AUSLÖSEIMPULS ?       NEIN
                         |
                         | JA

                    SOBALD ENTFERNUNGSMESSER
                    BEREIT  ( NACH △ T₁ )
                    A / D-UMWANDLUNGSBEFEHL
                    AUSGEBEN

                    SOBALD  A / D-WANDLER BEREIT
                    (NACH △T₂) ENTFERNUNGSWERT
                    EINLESEN
```

SOBALD ENTFERNUNGSMESSER BEREIT ( NACH $\triangle T_1$ ) A / D-UMWANDLUNGSBEFEHL AUSGEBEN

SOBALD A / D-WANDLER BEREIT (NACH $\triangle T_2$) ENTFERNUNGSWERT EINLESEN

FIG.14-1

FIG. 14-2

HAUPTPROGRAMM DER EINKANALIGEN MESSUNG

```
                    START-TASTE
                    GEDRÜCKT ?        NEIN        START/STOP = ∅

                         JA

                    INITIALISIEREN

                    START/STOP = 1

                    SENDER-
                    AUSLÖSEIMPULS ?   NEIN

                         JA

                    WARTEN  BIS ENTFERNUNGS-
                    MESSER  BEREIT  (ΔT₁)
```

FIG. 14 A-1

FIG. 14A-2

FIG. 15

KANAL – AUSWERTUNG

$30M < E < 200M$ ?

NEIN

JA

$N_K + 1$

$\Delta E_{K_N} = E_{K_N} - E_{K_{N-1}}$

$N_K = 1$ ?

JA

NEIN

$E_{K_N}$ SPEICHERN
$E_{K_{N-1}}$ LÖSCHEN

$N_K = 2$ ?

JA

NEIN

$E_{K_1}$ SPEICHERN

$\Sigma \Delta E_{K_2} = \Delta E_{K_2}$

$$\overline{\Delta E_{K_{N-1}}} = \frac{\Sigma \Delta E_{K_{N-1}}}{N-2}$$

FIG. 16–1

FIG. 16-2

FIG. 17

FIG. 18

MESS - KRITERIEN (EINKANALIG)

ERGEBNISFLAG = 1?

JA

NEIN

V₁ ANZEIGEN

MESSZEIT > 2 SEK ?

NEIN

JA

ANZEIGE "MESSUNG ERFOLGLOS" AUSGEBEN

MESSABSCHLUSS - FLAG = ∅

MESSABSCHLUSS - FLAG = 1

RÜCKSPRUNG INS HAUPTPROGRAMM

FIG. 19